# EUROPEAN PATENT SPECIFICATION

(11) **EP 0 781 540 B1**
(45) Date of publication and mention of the grant of the patent: **13.02.2002**
(21) Application number: 97100246.4
(22) Date of filing: 29.05.1992
(51) Int. Cl.: A61J 3/07

(54) **Method and apparatus for manufacturing pharmaceutical cellulose capsules - drying the capsule**
Verfahren und Vorrichtung zum Herstellen von pharmazeutischen Zellulosekapseln - die Kapsel trocknend
Procédé et dispositif de production de capsules pharmaceutiques et cellulose avec sèchage de capsule

(30) Priority: 31.05.1991 US 708023
(43) Date of publication of application: 02.07.1997
(62) Divisional of application: 92913599.4
(73) Proprietor: R.P. Scherer Technologies, Inc., Paradise Valley, Nevada 89119 (US)
(72) Inventor: Grosswald, Ralph R., Fairfield, Iowa 52556 (US); Anderson, Jeffory B., Provo, Utah 84663 (US); Andrew, Clair S., Provo, Utah 84604 (US)
(74) Representative: Pearce, Anthony Richmond

(56) References cited:
- EP-A- 0 102 832
- US-A- 2 526 683
- US-A- 2 869 178
- US-A- 3 617 588
- US-A- 4 001 211

## Description

### Technical Field of the Invention

The invention relates generally to methods and apparatus used in the manufacture of pharmaceutical capsules.

### Background of the Invention

Pharmaceutical capsules presently in general use are made of gelatin and the techniques for the manufacture of gelatin capsules are well developed. Compositions for cellulose capsules are also well known, but the first cellulose composition that was used commercially to manufacture cellulose capsules did not reliably break down in the user's digestive system. When this fact was discovered, the commercial manufacture of cellulose capsules was discontinued. An improved cellulose composition was later patented by Sarkar and several patents disclose methods for manufacturing cellulose capsules from the improved cellulose composition. However, in the fifteen years since the Sarkar patent issued, and in spite of many attempts, none have succeeded in manufacturing cellulose capsules in quantity, using the improved composition, with sufficient uniformity to be suitable for filling in modern high-speed filling machines. Until the present invention was made, cellulose capsules manufactured in quantity from the improved composition suffered imperfections such as wrinkles, starred ends and corrugations. These imperfections result in capsules either breaking, failing to separate, or jamming in the high-speed filling machine.

### Prior Art Gelatin Capsules

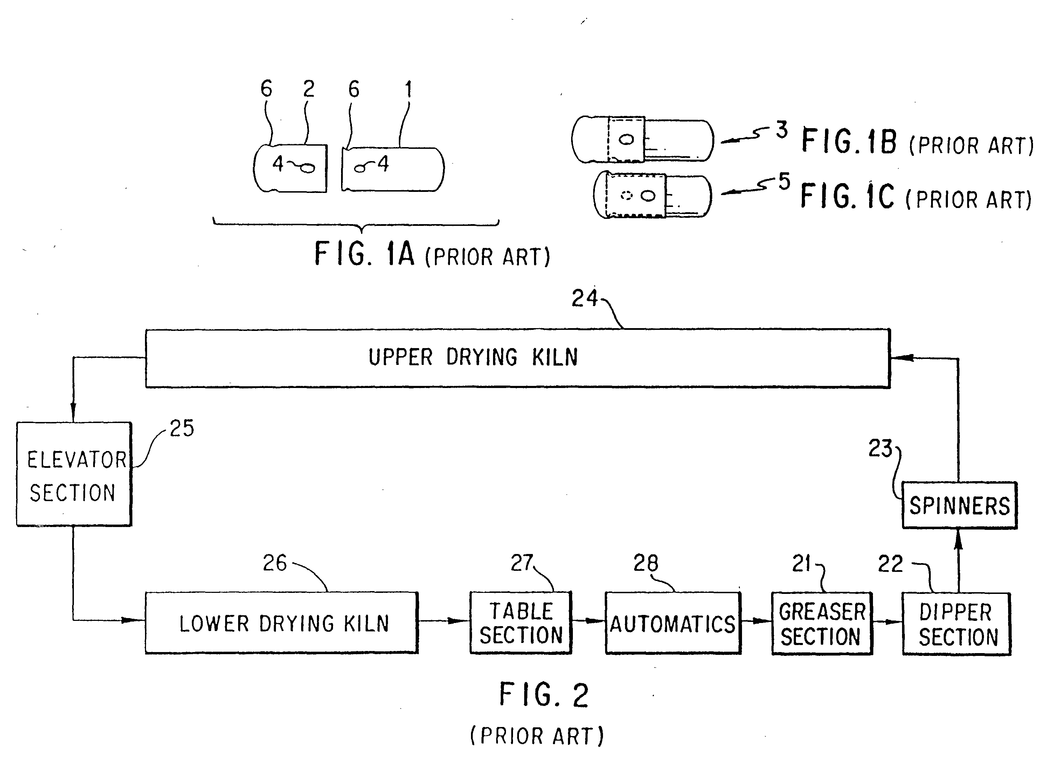

Prior art gelatin capsules, as shown in Figs. 1A, 1B and 1C, are made in a range of sizes including sizes listed in the first column of each of Tables 1 and 2. These tables are copied from the February, 1987 Specification Sheet of the CAPSUGEL Division of Warner-Lambert Company for its PREFIT™, SNAP-FIT™ and CONI-SNAP™ series of hard gelatin capsules. Table 1 shows the external diameter, obtained by optical measurements, of a body and a cap of each size of CAPSUGEL capsule. (Diameter is difficult to measure precisely because of the slightly tapered shape and the flexibility of the gelatin capsule parts.) Table 2 shows the target wall thickness of a body and a cap of each type and size of CAPSUGEL capsule. Table 3, copied from the Scherer LOX-IT™ specification sheet, gives the external diameter of the Scherer LOX-IT™ capsule caps and bodies in a range of sizes.

**TABLE 1 -**

| CAPSUGEL CAPSULE PART, EXTERNAL DIAMETER | | | | |
|---|---|---|---|---|
| PRE-FIT™ SMAP-FIT ™ or CONI-SNAP™ | | | | |
| Sizes | Body | | Cap | |
| | Inches | mm | Inches | mm |
| 000 | 0.373 | 9.60 | 0.394 | 10.00 |
| 00 | 0.324 | 8.23 | 0.339 | 8.60 |
| 0 el | 0.291 | 7.38 | 0.300 | 7.70 |
| 0 | 0.291 | 7.38 | 0.303 | 7.70 |
| 1 | 0.263 | 6.68 | 0.275 | 6.98 |
| 2 | 0.241 | 6.13 | 0.252 | 6.41 |
| 3 | 0.221 | 5.61 | 0.231 | 5.88 |
| 4 el | 0.201 | 5.11 | 0.212 | 5.38 |
| 4 | 0.201 | 5.11 | 0.212 | 5.38 |
| 5 | 0.185 | 4.70 | 0.193 | 4.89 |
| Tolerance: ±0.001 (±0.03 mm) | | | | |

―

**TABLE 2 -**

| CAPSUGEL CAPSULE PART, SINGLE WALL THICKNESS | | | | | | | | |
|---|---|---|---|---|---|---|---|---|
| | PRE-FIT™ | | | | SNAP-FIT™ or CONI-SNAP™ | | | |
| Size | Body | | Cap | | Body | | Cap | |
| | Inches | mm | Inches | - mm | Inches | mm | Inches | mm |
| 000 | 0.0042 | 0.107 | 0.0044 | 0.112 | ― | ― | ― | ― |
| | ±0.0009 | ±0.023 | ±0.0012 | ±0.030 | | | | |
| 00 | 0.0041 | 0.104 | 0.0042 | 0.109 | 0.0042 | 0.107 | 0.0043 | 0.109 |
| | ±0.0009 | ±0.023 | ±0.0012 | ±0.030 | ±0.0009 | ±0.023 | ±0.0012 | ±0.030 |
| 0 el | ― | ― | ― | ― | 0.0041 | 0.104 | 0.0042 | 0.107 |
| | | | | | ±0.0008 | ±0.020 | ±0.0010 | ±0.025 |
| 0 | 0.0040 | 0.102 | 0.0042 | 0.107 | 0.0041 | 0.104 | 0.0042 | 0.107 |
| | ±0.0008 | ±0.020 | ±0.0010 | ±0.025 | ±0.0008 | ±0.020 | ±0.0010 | ±0.025 |
| 1 | 0.0039 | 0.099 | 0.0041 | 0.104 | 0.0040 | 0.102 | 0.0041 | 0.104 |
| | ±0.0008 | ±0.020 | ±0.0010 | ±0.025 | ±0.0008 | ±0.020 | ±0.0010 | ±0.025 |
| 2 | 0.0038 | 0.096 | 0.0040 | 0.102 | 0.0039 | 0.099 | 0.0040 | 0.102 |
| | ±0.0008 | ±0.020 | ±0.0010 | ±0.025 | ±0.0008 | ±0.020 | ±0.0010 | ±0.025 |
| 3* | 0.0034 | 0.086 | 0.0036 | 0.092 | 0.0035 | 0.089 | 0.0036 | 0.092 |
| | ±0.0008 | ±0.020 | ±0.0010 | ±0.025 | ±0.0008 | ±0.020 | ±0.0010 | ±0.025 |
| 4 el | ― | ― | ― | ― | 0.0037 | 0.094 | 0.0038 | 0.096 |
| | | | | | ±0.0008 | ±0.020 | ±0.0010 | ±0.025 |
| 4 | 0.0034 | 0.086 | 0.0036 | 0.089 | 0.0034 | 0.086 | 0.0035 | 0.091 |
| | ±0.0008 | ±0.020 | ±0.0010 | ±0.025 | ±0.0008 | ±0.020 | ±0.0010 | ±0.025 |
| 5 | 0.0034 | 0.086 | 0.0036 | 0.092 | ― | ― | ― | ― |
| | ±0.0008 | ±0.020 | ±0.0010 | ±0.025 | | | | |

| | | | | | | | | |
|---|---|---|---|---|---|---|---|---|
| 3* SNAP-FIT™ Body Target ― 0.0034 ± 0.0008 | | | | | | | | |

**TABLE 3 -**

| SCHERER LOX-IT™ CAPSULE PART DIAMETER | | | | | |
|---|---|---|---|---|---|
| Size | 0 | 1 | 2 | 3 | 4 |
| CAP DIAMETER* (±0.003) | 0.301" | 0.272" | 0.250" | 0.230" | 0.210" |
| BOOY DIAMETER* (±0.003) | 0.289" | 0.262" | 0.240" | 0.220" | 0.200" |

| | | | | | |
|---|---|---|---|---|---|
| *DETERMINED AT CUT EDGE | | | | | |

U.S. Patent No. 3,399,803 to Oglevee et al. is directed to a hard-shell self-locking pharmaceutical capsule having a cap part and a body part, the parts adapted for machine filling. Oglevee discloses mold pins having a uniform taper or candle-shape such as to avoid suction when the part is removed from the pin and to provide a wedging fit between the capsule cap and the capsule body. Oglevee also discloses the shaping of the cap and body to provide a semilocked position and a locked position. A single groove in the cap and a matching single groove in the body provide a mechanical lock.

U.S. Patent Nos. 3,508,678 and 3,664,495 both to Graham et al. disclose a capsule cap having an indent, in addition to a locking groove, which defines a prelock position by providing either an elastic friction fit with the capsule body (3,664,495) or a mechanical lock between the indent of the cap and the groove in the body (3,508,678).

U.S. Patent No. 4,247,006 to Bodenmann et al. discloses a capsule body having a reduced diameter in the area of its open end, and further the capsule cap and the capsule body each having an indentation to provide for a positive engagement of the body and the cap.

### Prior Art Process for Gelatin Capsules

U.S. Patent No. 1,787,777 to Colton describes the "Colton" machine used in the manufacture of gelatin capsules. Key elements in the prior art manufacture of gelatin capsules are illustrated in Figs. 1-7 of the accompanying drawings. Fig. 1A shows the parts of a capsule having a body **1** and a cap **2**. The parts are shown in Fig. 1B in a prelock position **3** held in position by prelock dimples **4**. The parts are also shown in Fig. 1C in a filled position **5** held in position by locking rings **6.** Fig. 2 shows elements of the traditional "Colton" capsule manufacturing machine. The elements are a greaser section **21,** a dipper section **22,** spinners **23,** upper drying kiln **24,** lower drying kiln **26,** table section **27** and automatics **28**. A pinbar, having thirty pins **31** mounted to a bar **32**, is shown in Fig. 3. Fig. 4 shows gel **41** formed around a pin **31** to a dip line **42**. Also shown is the trim line (cut-point) **43** and the area **44** on the pin above the dip line. Fig. 5 shows a prior art stripper **51** about to push a capsule part **53** off a pin from the area **44** above the dip line with pushing face **52.** A side view of a prior art stripper having a pivot **61** and a spring **62** is shown in Fig. 6. Fig. 7 shows a knife **71** trimming a capsule part to remove the rough edge **72** and create a clean edge **73**.

U.S. Patent Nos. 1,978,829 (to Wilkie), 3,632,700 (to Oglevee), 3,794,453 (to Padilla et al.), 4,705,658 (to Lukas) and 4,997,359 (to Lebrun) are all directed to processes for manufacturing gelatin capsules. The Wilkie patent discloses an apparatus for drying capsules by directing a stream of air at the part of the capsule that contains the most moisture. A fine stream of air passing through a hole in a plate is directed to the closed end of the capsule so that a greater drying effect is experienced on the closed ends of the capsule than on the sides of the capsule. A plate is provided having multiple holes spaced to match the position of the pins. The Oglevee patent discloses a method for insuring capsule wall thickness uniformity by measuring the viscosity of the liquid gel solution in the dipping tank and causing corrective change in viscosity by changing the evaporative exposure or by adding lower viscosity gel to the tank. The Padilla patent discloses an air duct directing cooling air onto freshly dipped capsule mold pins for improved wall thickness characteristics. The duct is an air conduit for moving cool air upwardly against the rounded ends of the coated pins for uniform flow. The duct encloses a zone surrounding the array of pins. The Lukas patent is directed to reducing the drying time in the manufacture of hard shell gelatin capsules. Pins are irradiated with microwave energy until the gelatin dries. The Lebrun patent discloses a dipping bath, having a plurality of small wells and an impeller for maintaining the solution in the wells at a constant temperature. The pins dip into the wells.

### Prior Art Capsule Forming Pins

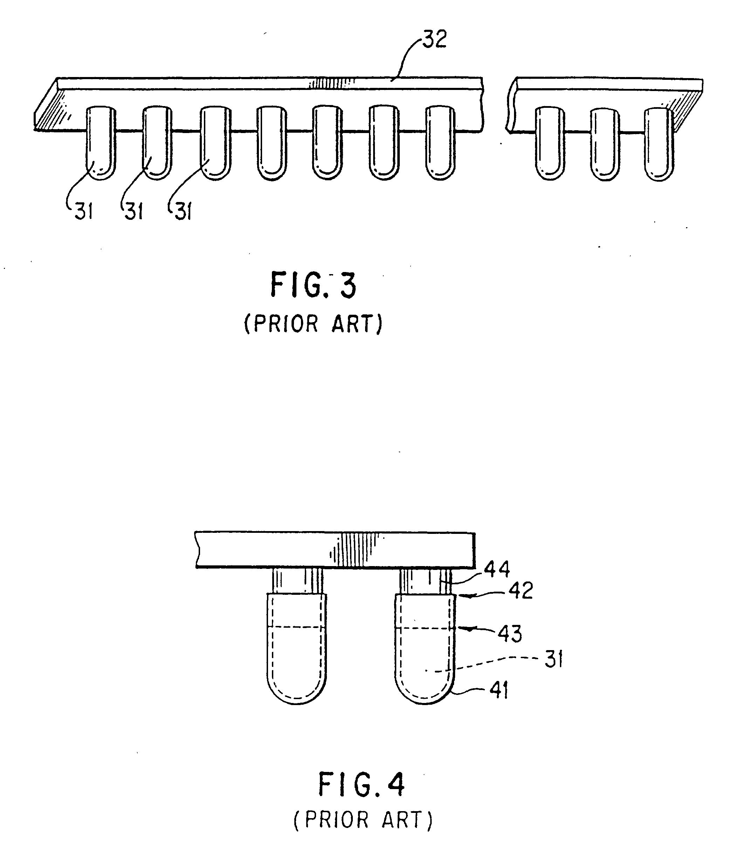

U.S. Patent No. 4,758,149 to Sauter is directed to a capsule forming pin having a cylindrical sidewall and a groove extending around the cylindrical sidewall, the groove having a non-angular cross-sectional profile, both the cylindrical sidewall and the groove having a smooth burnished-hardened surface. Sauter discloses in Fig. 3A, item C and column 4, line 45, that a prior-art capsule cap pin for a "0" ("zero") size capsule has a diameter at the cut-point of 0.2973-0.2978 inch (7.551-7.564 mm). The prior-art capsule body pin at the cut-point is 0.2848-0.2853 inch (7.234-7.247 mm).

For a range of popular sizes of gelatin capsules, Table 4 shows the nominal cut-point diameter for the prior art body pin and the prior art cap pin used in forming, respectively, the gelatin capsule body and the gelatin capsule cap.

**TABLE 4 -**

| PIN CUT-POINT DIAMETER | | | | |
|---|---|---|---|---|
| PIN CUT-POINT DIAMETER | | | | |
| Sizes | Body | | Cap | |
| | Inches | mm | Inches | mm |
| 00 | 0.3195 | 8.12 | 0.3355 | 8.52 |
| 0 | 0.2855 | 7.25 | 0.2975 | 7.56 |
| 1 | 0.2575 | 6.54 | 0.2685 | 6.82 |
| 2 | 0.2355 | 5.98 | 0.2455 | 6.24 |
| 3 | 0.2155 | 5.47 | 0.2255 | 5.73 |
| 4 | 0.1955 | 4.97 | 0.2045 | 5.19 |

### Prior Art Process for Cellulose Capsules

An improved methyl cellulose ether composition that may be used in the present invention is disclosed in U.S. Patent No. 4,001,211 to Sarkar. Sarkar also discloses a process for the manufacture of capsules from his improved methyl cellulose ether composition. The improved methyl cellulose ether composition disclosed by Sarkar is an aqueous solution of a thermal gelling methyl cellulose ether composition suitable for use in preparing pharmaceutical capsules by an aqueous dip coating process using preheated pins and having a methoxyl DS of about 1.5-2.0, a C₂-C₃ hydroxyalkyl MS of about 0.1-0.4, a 2 wt. percent aqueous solution viscosity of about 2-10 cps at 20°C and a thermal gel point of about 50°-80°C, and a 15-30 wt. percent aqueous solution viscosity of about 1,000-10,000 cps at 20°C, said composition having as a 15-30 wt. percent aqueous solution: (A) essentially Newtonian fluid properties as defined by a power law coefficient, n, of 0.9-1.0 at shear rates of between 0.1-10 sec⁻¹, and (B) a 50 sec gel yield strength of at least 150 dynes/cm² at 65°C.

U.S. Patent No. 4,993,137 to Muto is directed to the manufacture of capsules made from the improved methyl cellulose ether composition of Sarkar. Muto discloses a process for gelling the solution by dipping solution-coated pins into thermally controlled water. In the Muto process, the solution is gelled on the surface of the pins by first dipping the pins into solution and thereby coating the pins with solution and then dipping the coated pins into heated water to set the gel.

U.S. Patent Nos. 2,526,683 (to Murphy), 2,671,245 (to Kath), 3,617,588 (to Langman) and 3,842,242 (to Chisholm) are directed to methods of manufacture of capsules from methyl cellulose (the original methyl cellulose, not the improved methyl cellulose disclosed by Sarkar). The Murphy patent is the original patent for the manufacture of methyl cellulose capsules. This patent discloses the preheating of pins prior to dipping so that the solution adheres to pins in gelled form, the use of a sequence of different "successively warmer temperatures" through the drying kiln, drying using infrared lamps, and cooling by air. Murphy accomplished a mechanization for the manufacture of cellulose capsules. However this method was found to be inadequate when (later) it was applied to the improved cellulose of the Sarkar patent. The Kath patent discloses apparatus for manufacturing either gelatin or methyl cellulose capsules. It discloses the use of tracks and a plurality of pins. The pins are moved along the tracks and moved, rotated and gyrated as needed through the various stations. This patent contains detailed mechanical disclosure. The Langman patent is directed to elimination of unwanted thermal gelation in the coating bath by the use of low viscosity hydroxyalkayl cellulose ethers and the rapid immobilization of the dip coating by induction heating after removal of the pins from the bath. The Chisholm patent is directed to heating the pins prior to dipping and discloses apparatus for preheating capsule pins in a "Colton" capsule machine. A tray is provided containing spheroidal particles heated to a predetermined temperature. The pins are dipped into the heated particles just prior to being dipped in the solution.

The prior art for the manufacture of pharmaceutical capsules from the improved thermogelling methyl cellulose ether compositions disclosed in the Sarkar patent contain a number of unresolved problems. These unresolved problems include skinning, wrinkling, starred ends and corrugations in the wall of the capsule parts, and damage to the capsule parts occurring during removal from the pins. These problems cause breaking, failure to separate or jamming in the high-speed filling machines. There is no discussion in the prior art of the source of these problems.

None of the above mentioned patents disclose a method for making cellulose capsules of sufficient uniformity and rigidity that they may be filled on modern high-speed capsule filling machines. This uniformity and rigidity has now been accomplished using the process, apparatus and capsule improvements that are the subject of the present invention as disclosed in claims 1, 11 and 14.

According to one aspect of the present invention there is provided a method of manufacturing pharmaceutical cellulose capsules, each capsule consisting of two parts, a capsule body and a capsule cap, each part made from an aqueous solution of thermogelling cellulose ether composition, using body pins as molds for capsule bodies, and cap pins as molds for capsule caps, and using a plurality of pinbars, each pinbar having a plurality of the pins mounted thereon, the method comprising the steps of:
a) greasing the pins;
b) dipping the pins into the solution to cause solution to gelatinize on the surface of the pins;
c) drying the gelatinized solution on the surface of the pins of a group of pinbars to form capsule parts;
d) heating the pins of the group of pinbars;
e) removing the capsule parts from the pins; and
f) moving the pinbars in a closed loop so as to repeat steps a) through e);
characterised in that the step of heating the pins includes differentially heating each given pin of the group of pinbars in accordance with the expected differential heat loss from the given pin between heating the given pin and dipping the given pin.

According to another aspect of the present invention there is provided a method of manufacturing pharmaceutical cellulose capsules, each capsule consisting of two parts, a capsule body and a capsule cap, each part made from an aqueous solution of thermogelling cellulose ether composition, using body pins as molds for capsule bodies, and cap pins as molds for capsule caps, and using a plurality of pinbars, each pinbar having a plurality of the pins mounted thereon, the method comprising the steps of:
a) greasing the pins;
b) heating the pins;
c) dipping the pins of a dipping group of pinbars into the solution to cause the solutions to gelatinize on the surface of the pins of the dipping group;
d) drying the gelatinized solution on the surface of the pins to form capsule parts;
e) removing capsule parts from the pins; and
f) moving the pins in a closed loop so as to repeat steps a) through e);
characterised in that heating the pins includes heating the pins of a dipping group after greasing the pins and before dipping the pins, by thermal convection.

According to a further aspect of the present invention there is provided an apparatus for the manufacture of pharmaceutical cellulose capsules, each capsule consisting of two parts, a capsule body and a capsule cap, each part made from an aqueous solution of a thermogelling cellulose ether composition, comprising:
a plurality of pinbars having body pins as molds for capsule bodies and cap pins as molds for capsule caps, each pinbar having a plurality of the pins mounted thereon;
greaser means for greasing the pins;
dipper means for dipping the pins into the solution and withdrawing the pins from the solution;
dryer means for drying gelatinized solution on the surface of the pins of a group of pinbars to form capsule parts;
heater means for heating the pins;
automatics means for removing capsule parts from the pins; and
transport means for moving the pinbars through the greaser means, the dipper means, the dryer means, the heater means, and the automatic means, in a closed loop transport path;
characterised in that the heater means includes a split-deck heater having means for differentially heating each given pin of the group of pinbars in accordance with the expected differential heat loss from the given pin between heating the given pin and dipping the given pin.

According to a still further aspect of the present invention there is provided an apparatus for the manufacture of pharmaceutical cellulose capsules, each capsule consisting of two parts, a capsule body and a capsule cap, each part made from an aqueous solution of a thermogelling cellulose ether composition, comprising:
a plurality of pinbars having body pins as molds for capsule bodies and cap pins as molds for capsule caps, each pinbar having a plurality of the pins mounted thereon,
greaser means for greasing the pins;
dipper means including a dipper dish for capsule bodies and a dipper dish for capsule caps, for dipping the pins into the solution;
dryer means for drying gelatinized solution on the surface of the pins to form capsule parts;
automatic means for removing the capsule parts from the pins; and
transport means for moving the pins through the greaser means, the dipper means, the dryer means and the automatics means, in a closed loop transport path;
characterised in that the apparatus further comprises:
dipping group heater means located on the transport path between the greaser means and a dipping dish, for heating the pins of a dipping group of pinbars by thermal convection.

Thus, the present invention provides a method and apparatus for manufacturing pharmaceutical capsules, each capsule consisting of a capsule body and a capsule cap, uses an aqueous solution of thermogelling cellulose ether composition and uses capsule body pins and capsule cap pins as molds. A group of pins is mounted on a pinbar. The method involves heating the pins; dipping the pins into the solution to cause the solution to gelatinize on the surface of the pins; removing the pins from the solution; drying the gelatinized solution on the surface of the pins to form capsule bodies and capsule caps; and removing the capsule bodies and capsule caps from the pins.

In one embodiment of the present invention, the time interval between heating and dipping may vary from bar to bar. To compensate, each bar is heated to a different temperature according to the time interval associated with the bar. Pins may be heated by radiant energy or by hot air or via the bar at a plurality of thermally isolated stations. Additionally a portion of the bar may be heated to a predetermined temperature. The process includes heating the pins before dipping and heating the pins after dipping. The dipping dishes for capsule bodies and capsule caps are spaced apart farther than in the traditional Colton machine and a pre-dip heating area is located between the dipping dishes. After the pins have been dipped and removed from the solution they are heated again to further gelatinize the solution on the surface of the pins. Drying the pins includes providing counterflow movement of air through an enclosure over the pins such that the pins initially encounter relatively humid air and, as they become drier, they encounter increasingly drier air. Also, the pins are heated so that the capsule bodies and capsule caps are dried from the inside-out. Removing the capsule parts from the pins involves gripping the capsule parts between opposing gripping surfaces.

In an embodiment the capsule parts have a thicker wall than the equivalent size gelatin capsule and capsule bodies include a stiffening ring.

Problems in the prior art are overcome in one embodiment of the present invention as follows. In preheat, to compensate for differential cooling from some bars waiting longer than others to dip, thermally isolated heating elements are provided below the bars and radiant heaters are provided above the bars to allow selective heating of bars or portions of bars to eliminate temperature differences at the time of dip. To allow preheat in the dipper area without the problems associated with Chisholm's heated particle method, the dipping dishes are moved away from the centerline and thermal convection heaters and radiant heaters are inserted. For the same purpose, thermal conduction heating via the back of the bars is also provided. To achieve the level of uniformity necessary for high-speed filling and to eliminate the skinning over and wrinkling associated with the outside-in drying of the prior art due to air blowing directly over the pins, inside-out drying is provided. Post-dip heating is used in addition to pre-dip heating. Post-dip heating continues the gelling process after dip, assures rapid firming of the cellulose film, and supports inside-out drying. To avoid the uneven or excessively rapid drying that causes deformation in the prior art, an appropriate relationship is maintained between water vapor pressure in the capsules and water vapor pressure in the surrounding air through the drying process. A fully enclosed drying kiln is provided to support inside-out drying, humidity control of air surrounding the pins, and energy efficiency. To avoid damaging the open end of the capsule part during removal of the part from the pin, which often occurs when the prior art technique is used on cellulose capsule parts, a gripper is provided. To eliminate the jamming in the filling machines due to oversize parts, the pin is undersized to compensate for the unexpected differential in shrinkage between the cellulose capsule and the gelatin capsule. To avoid malfunction in filling machines caused by flexibility of the capsule part and deformation out of round, a pin is further undersized to allow a thicker capsule wall. Also the body pin adds an extra circumferential reinforcing ring to the capsule body between the lock ring and the dome.

### Brief Description of the Drawings

Figs. 1A, 1B and 1C show a prior art capsule body and cap.

Fig. 2 shows the elements of the traditional (prior art) capsule manufacturing machine.

Fig. 3 shows pins mounted on a pinbar (prior art).

Fig. 4 shows a pin dipped to a dip line (prior art).

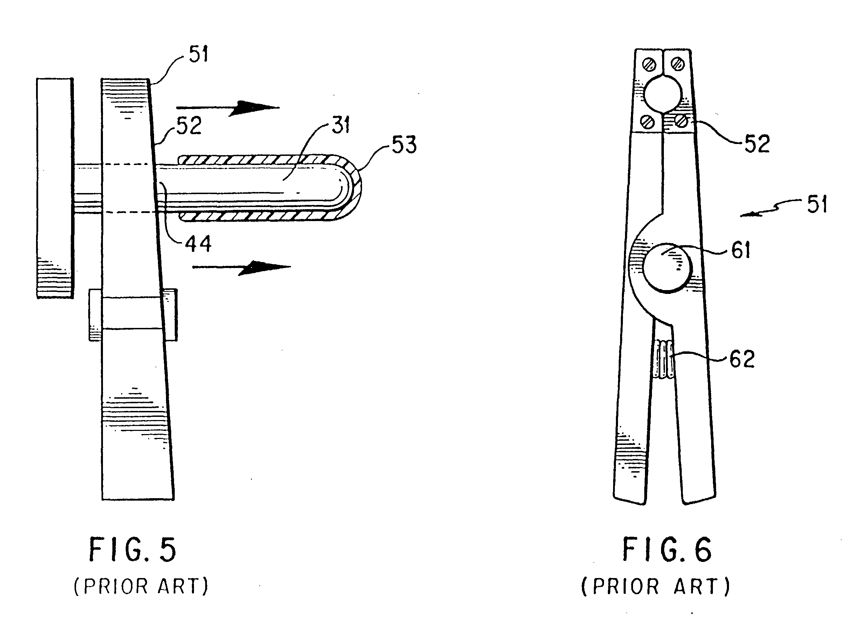

Fig. 5 shows a prior art stripper pushing a capsule part off a pin.

Fig. 6. shows a prior art stripper.

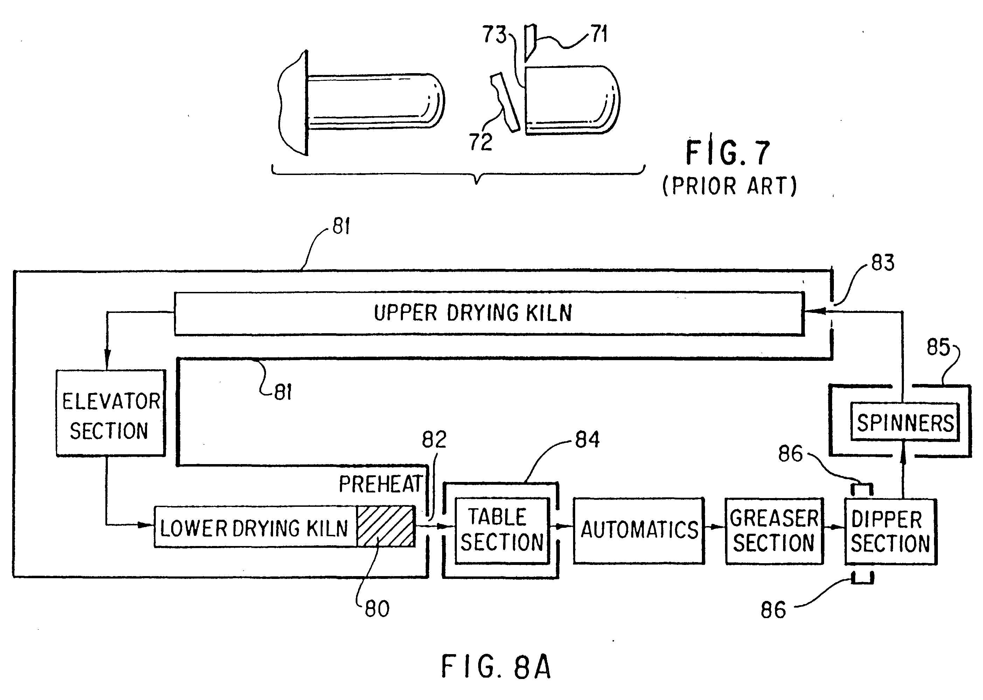

Fig. 7 shows a knife trimming the rough edge of the capsule (prior art).

Fig. 8A shows a schematic embodiment of the present invention, including a preheat section and a kiln enclosure.

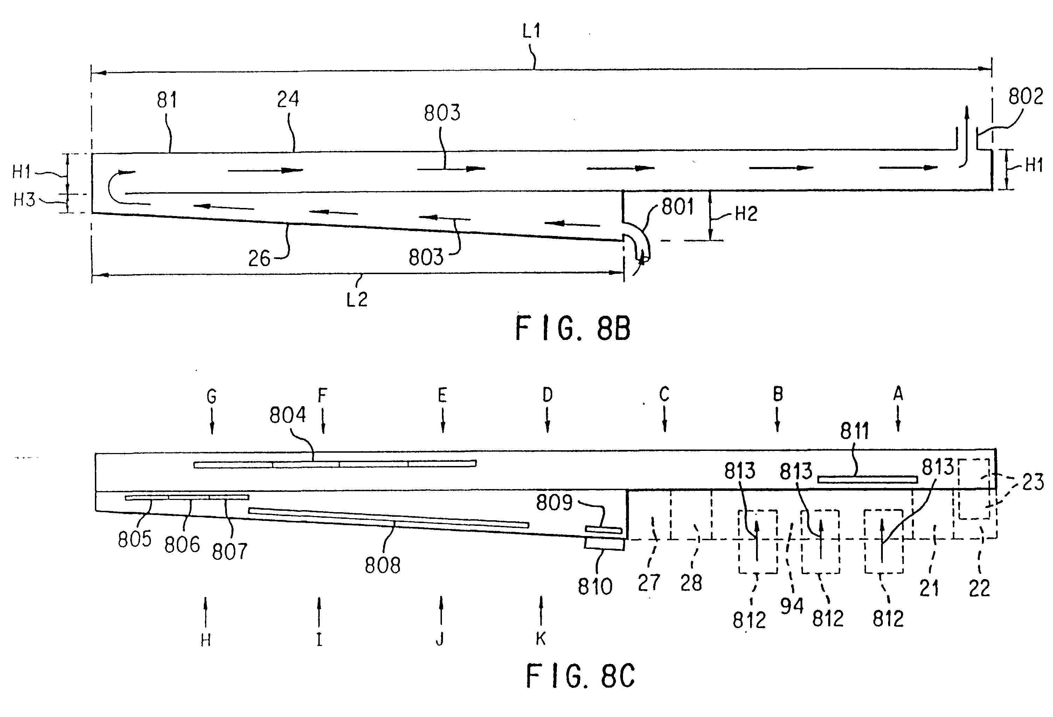

Fig. 8B is a schematic cross-sectional elevation view of the drying kiln showing the enclosure and air flow.

Fig. 8C shows location of the heating elements and fans in the enclosure of Fig. 8B.

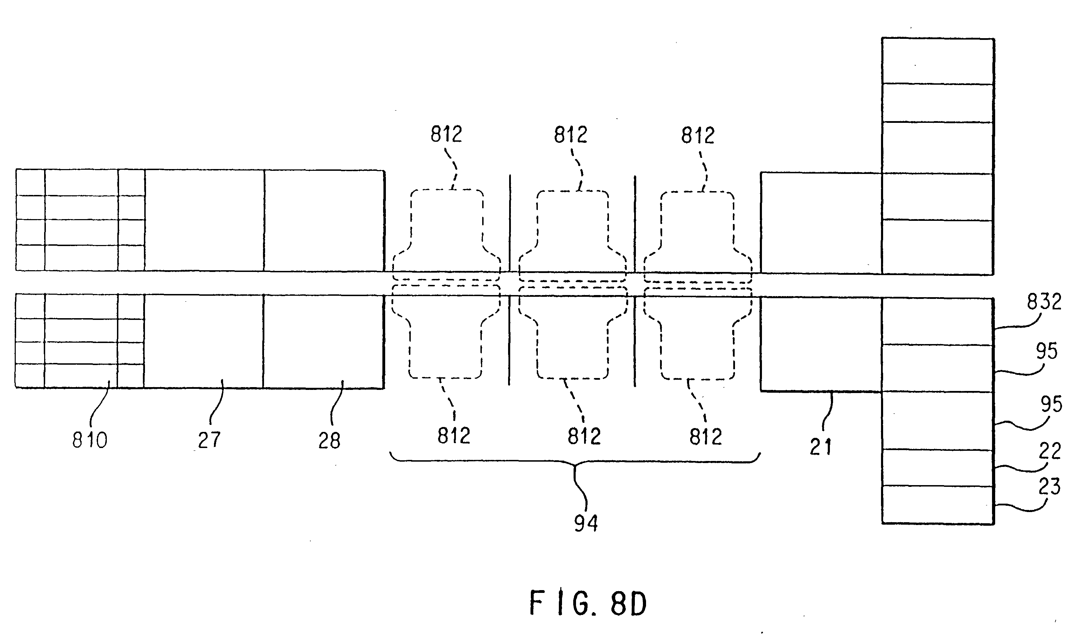

Fig. 8D shows a schematic plan view of all sections between the split deck and the spinners.

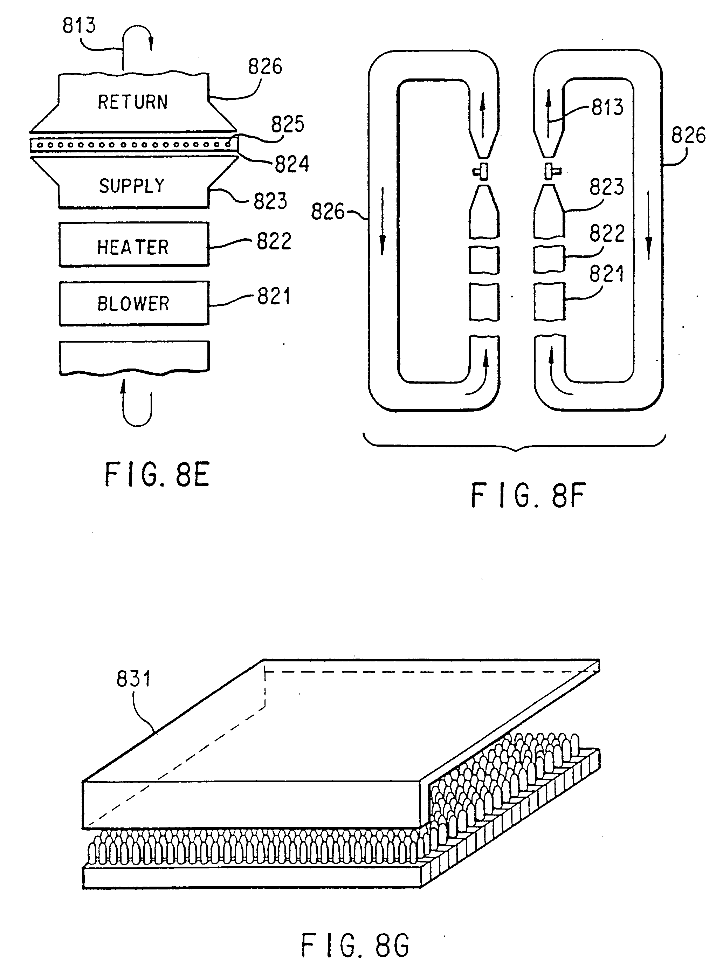

Figs. 8E and 8F show two elevation views of the convection preheat system.

Fig. 8G shows the insulation box for the table section.

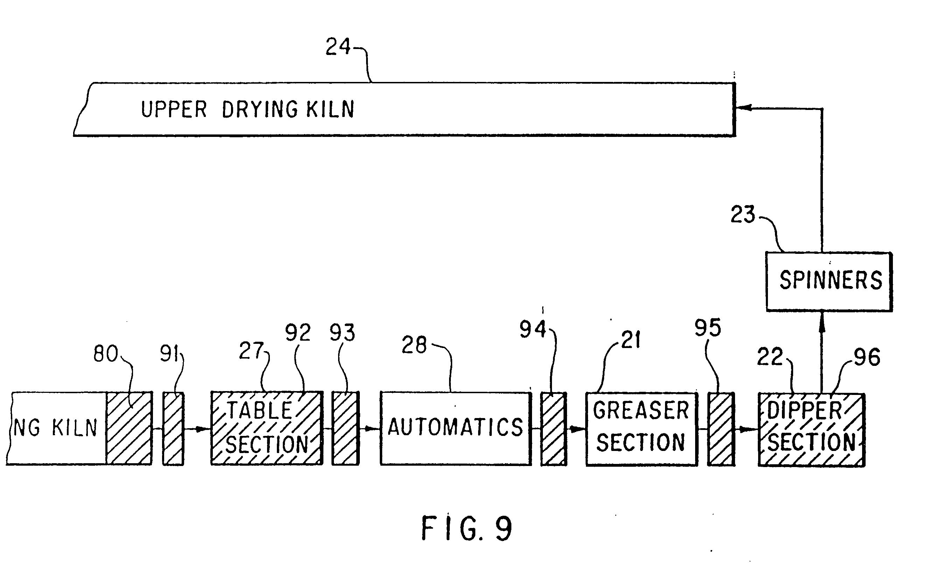

Fig. 9 shows a schematic embodiment of the present invention, including locations of the several preheat sections.

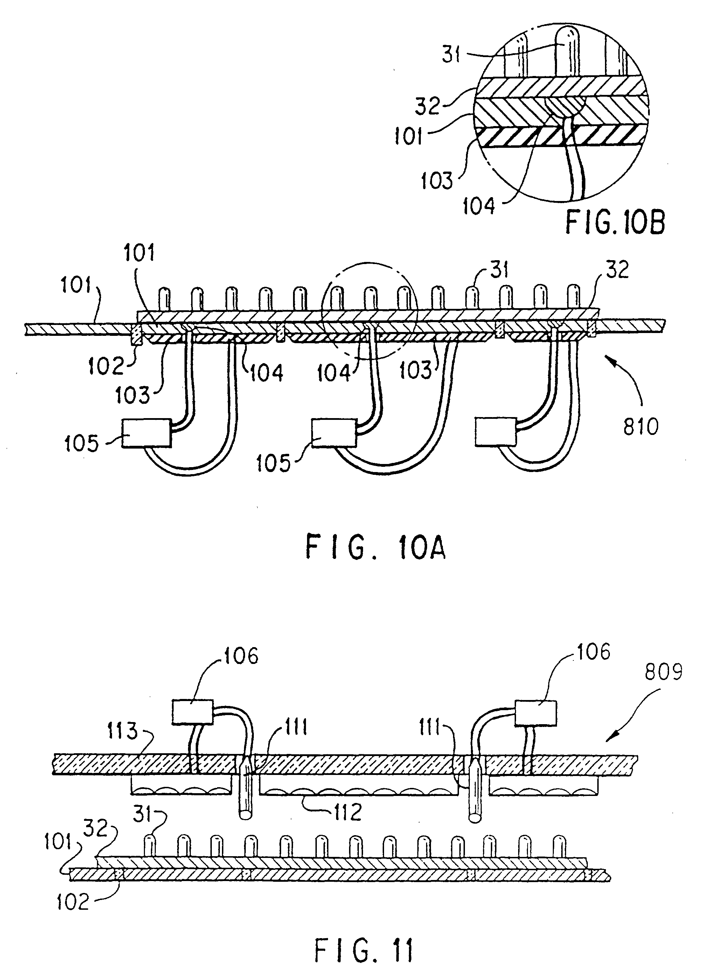

Figs. 10A and 10B show temperature sensors and underdeck heaters associated with the split deck.

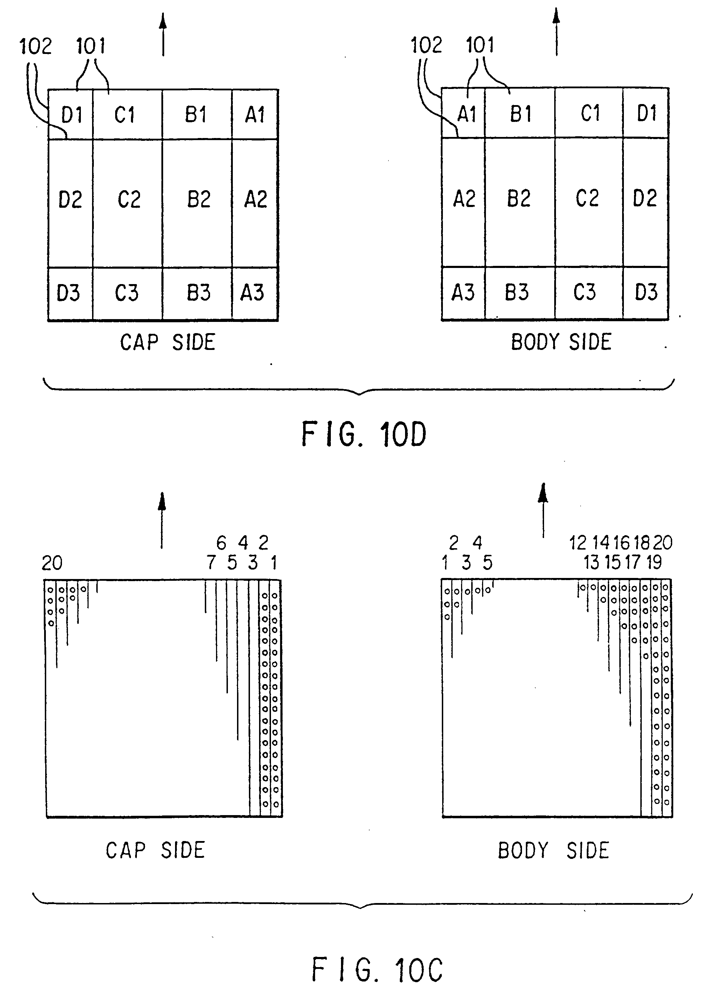

Fig. 10C shows a group of cap pinbars and the corresponding group of body pinbars.

Fig. 10D shows the split deck layout for the bars of Fig. 10C.

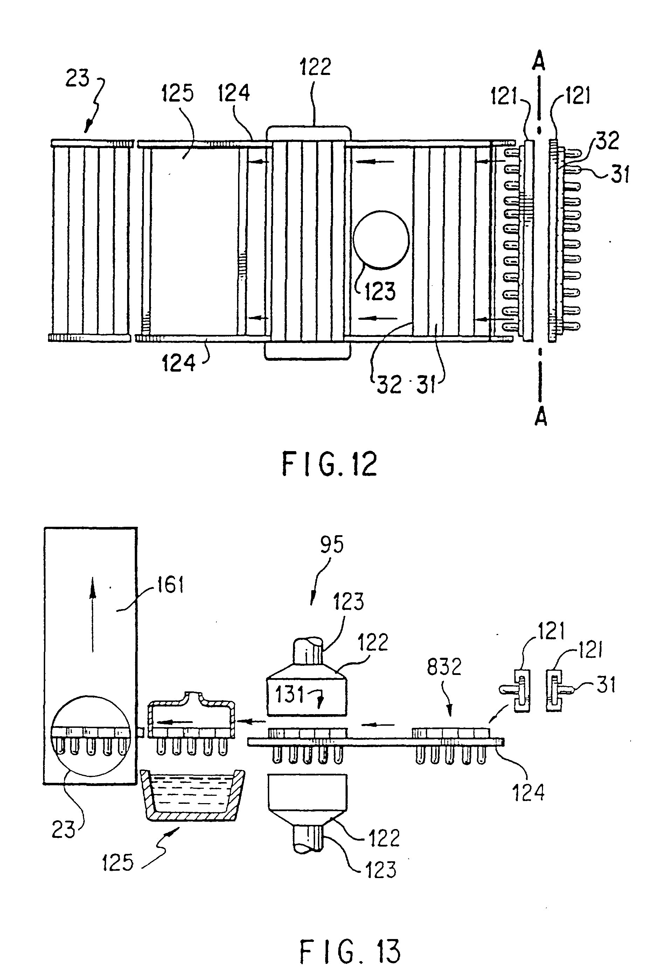

Fig. 11 shows non-contact temperature sensors and overhead heaters associated with the split deck.

Figs. 12 and 13 show a plan and elevation view respectively of a dipper section preheat arrangement.

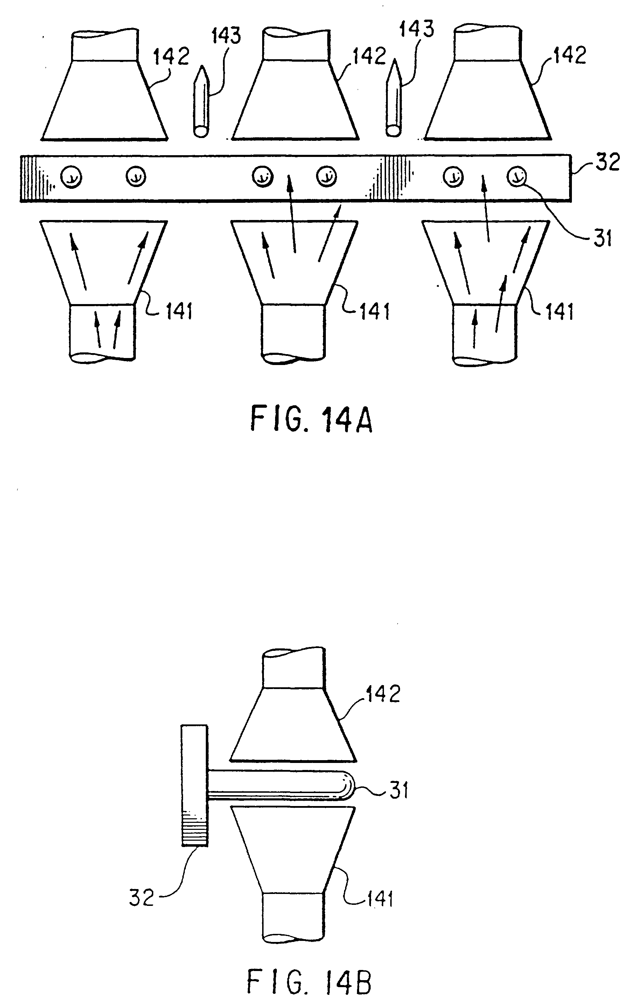

Figs. 14A and 14B show two views of a preheater with air ducts for selectively heating pins.

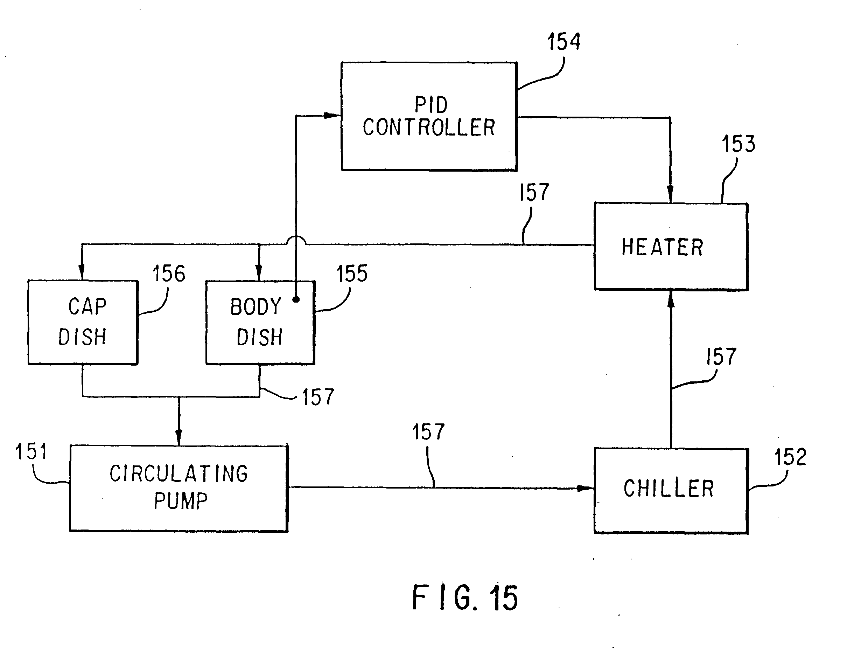

Fig. 15 shows the gel dish temperature control scheme.

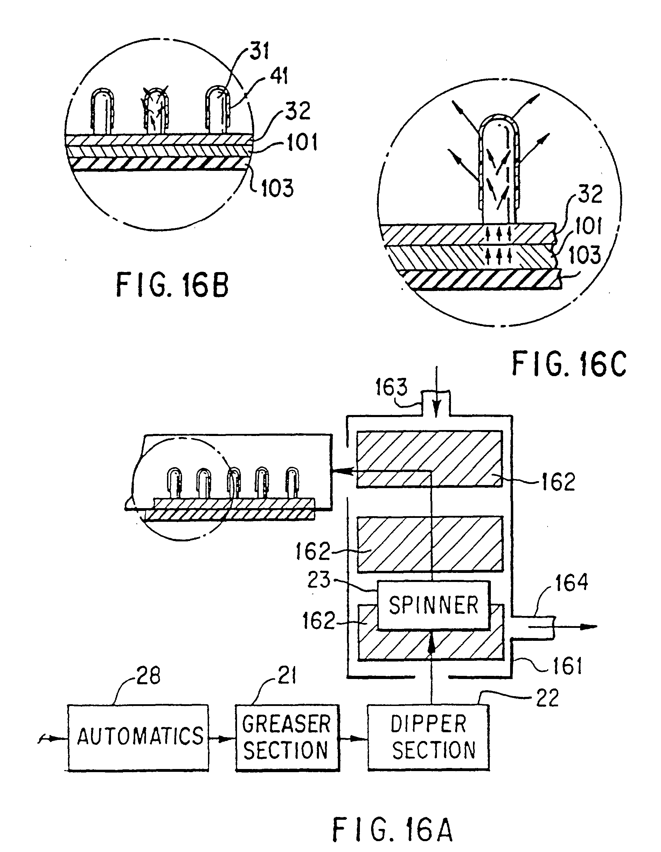

Figs. 16A, 16B and 16C show apparatus for heating the pins through the pinbar to permit post-dip gelling in the spinner section and "inside-out drying" in the drying kiln.

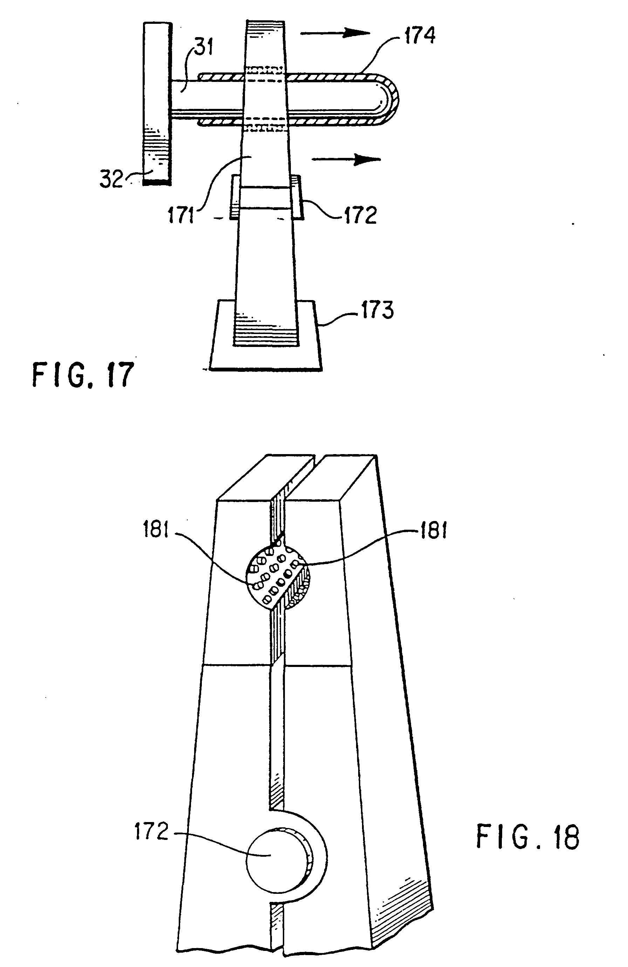

Fig. 17 illustrates the process of removing the capsule part from the pin.

Fig. 18 gives detail of the stripper of Fig. 6 as modified for the present invention.

### Detailed Description of the Invention

The present invention provides improvements over the method of manufacture of pharmaceutical capsules disclosed in U.S. Patent No. 4,001,211 to Sarkar. The Sarkar cellulose composition is particularly suited for preparing pharmaceutical capsule shells which dissolve at a rate comparable to gelatin capsules. Delay release characteristics can be obtained by incorporation of a less water-soluble cellulose such as ethyl cellulose as described by Greminger and Windover in U.S. Patent No. 2,887,440. In a preferred embodiment, the present invention uses the improved thermogelling methyl cellulose ether compositions disclosed in the Sarkar patent, including a thermal gelling methyl cellulose ether composition suitable for use in preparing pharmaceutical capsules by an aqueous dip coating process using preheated pins and having a methoxyl DS of about 1.5-2.0, a C₂-C₃ hydroxyalkyl MS of about 0.1-0.4, a 2 wt. percent aqueous solution viscosity of about 2-10 cps at 20°C and a thermal gel point of about 50°-80°C, and a 15-30 wt. percent aqueous solution viscosity of about 1,000-10,000 cps at 20°C, said composition being further characterized by having as a 15-30 wt. percent aqueous solution: (A) essentially Newtonian fluid properties as defined by a power law coefficient, *n*, of 0.9-1.0 at shear rates of between 0.1-10 sec⁻¹, and (B) a 50 sec gel yield strength of at least 150 dynes/cm² at 65°C.

The apparatus of the present invention, in a preferred embodiment, is based on the type of capsule machine disclosed in U.S. Patent No. 1,787,777 to Colton and U.S. Patent No. 2,671,245 to Kath. The machine that was modified to embody the present invention was a "Colton" capsule machine manufactured by R & J Engineering Corporation, 100 Hansen Avenue, Kitchener, Ontario, Canada N2C 2 E2.

### 1. General

The present invention provides a production process and a fully mechanized production apparatus that may use the modified cellulose in U.S. Patent No. 4,001,211 to Sarkar for manufacturing pharmaceutical capsules of sufficient uniformity and rigidity that they may be filled on modern high-speed capsule filling machines. Capsules may be made in a range of sizes similar to the range of sizes in Tables 1-3. For a given capsule the capsule bodies and capsule caps have different dimensions as illustrated for the prior art capsules in Figs. 1A-1C. The process involves a series of steps performed by one machine. Each capsule part is made by dipping a hot stainless steel pin (31) into a cellulose gel solution and drying the gel to form a hard film over the pin. The pins are mounted in a row on a bar (32) as illustrated in Fig. 3. Fig. 4 shows a pin with a gel coating. Body pins are mounted on one set of bars and cap pins are mounted on a corresponding set of bars so that corresponding bodies and caps may pass through the entire process in phase with each other and emerge from the process facing each other positioned for assembly as a capsule.

The process, in a first embodiment, is arranged so that the bars travel in a continuous loop illustrated in Fig. 8A. The process steps in this embodiment are:
**Preheating** the pin bars (Preheat Section);
**Oiling** the pins (Greaser Section);
**Dipping** the pins into cellulose solution (Dipper Section);
**Spinning** the coated pins (Spinner Section);
**Drying** the gel (Upper and Lower Drying Kilns);
**Positioning** the pinbars so that corresponding caps and bodies face each other (Table Section);
**Removing** the caps and bodies (Automatics);
**Trimming** the caps and bodies (Automatics);
**Joining** caps and bodies into prelock position (Automatics).

Removing and trimming the caps and bodies is illustrated in Figs. 17 and 7 respectively. Joining the caps and bodies to form a capsule in a prelock position, ready for filling, is illustrated in Figs. 1A and 1B. Fig. 1C shows a capsule with the lock ring engaged as it would be after filling.

The process is similar to the process for manufacturing gelatin capsules except that the process for manufacturing gelatin capsules involves dipping cold pins into a gel whose temperature is above the gel point whereas the process for manufacturing cellulose capsules involves dipping hot pins into a gel whose temperature is below the gel point. Novel aspects of the present invention include process steps designed to overcome the peculiar difficulties of manufacturing cellulose capsules using the cellulose composition disclosed in the Sarkar patent. In a preferred embodiment, the present invention uses temperature, humidity and air flow control components including heaters, sensors, enclosures, fans and thermal isolation components. This embodiment also uses pins that are narrower than the pins used in the prior art and in one embodiment provides a capsule body having a stiffening ring.

### 2. Temperature Control

Capsules must have consistent wall thicknesses from capsule to capsule for them to be filled on high-speed filling machines. To accomplish this, the temperature of the stainless steel pin molds, which are attached to a pinbar, must be controlled throughout the process. The pins must be heated uniformly so that a repeatable amount of gel is picked up on each pin in the dipping operation. While several patents speak about the need to heat the pinbars prior to dip, none address the critical need for heating all pins from bar to bar to substantially the same temperature to produce capsules sufficiently uniform for high-speed filling. In the process of making cellulose capsules on a traditional "Colton" capsule machine, some pinbars must wait longer than others to dip. The present invention includes compensatory temperature control where some bars or parts of bars are independently heated to higher temperatures than others to compensate for the longer wait these bars have before dipping and for the different ambient temperature (due to temperature gradients within the machine) experienced during the wait, and also for temperature gradients resulting from differing pin, pinbar, and/or deck conductivities. The compensatory temperature control system operates to maintain predetermined temperatures in the bars prior to dipping to achieve substantially equal temperatures in the pins at the time of dipping. Compensatory temperature control can be provided by a variety of equipment configurations as follows:

### a) Compensatory Sensing and Heating on Drying Decks

Groups of twenty bars move from drying station to drying station on a metal deck. Since bars sit in each position for some time before moving, heating sources may be positioned under the deck and also over the bars in such a manner so that heat may be applied to raise the temperature of selected bars in the group of twenty. The last station of the lower deck, just prior to the table section, provides separate heating areas that are thermally isolated from each other so as to heat bars and portions of bars selectively. When bars leave the drying decks and load onto the table section, they are fed one at a time into the center elevator for processing one at a time in the automatics section. The last bar in the group of twenty must wait the longest. By selectively heating these later bars to higher temperatures, the delay before dip is compensated for. At time of dip, these later bars will have a temperature substantially equal to the earlier bars that had less time to cool down before entering the dipping station.

### b) Insulation and Compensatory Heating in Table Section

After leaving the drying decks, bars are fed from the deck onto a Table Section which takes the group of twenty bars and feeds them one at a time into the T-slides for continued processing. In this Table Section heat can be applied by any means to maintain the later bars at the required temperature so that they do not cool as they wait their turn for further processing. The table section is covered with an insulated box with heat sources to maintain temperatures and further accommodate the later bars so that all bars reach the dipping bath at substantially the same temperature.

### c) Compensatory Sensing and Heating to Adjust for Temperature Variations from the Front of the Bar to the Back of the Bar

Because of the temperature gradients within the machine, there is no guarantee (with the prior art machines) that the temperature along the length of a given bar will be constant. Variation of temperature along the length of the bar would cause temperature variation pin to pin. For example, the front end of the bar may be cooler than the back end, and thus pins in the front are also cooler. In the present invention, the differential heating mentioned above also may be set up to compensate for temperature gradients within the machine in order to ensure uniformity of temperature, pin to pin, along a given bar. This is accomplished by applying heat selectively via the deck supporting the bars and from overhead radiant heaters. The last station of the lower deck, just prior to the table section which delivers bars one at a time to the automatics, is known as the "split deck." Heating from each thermally isolated section of the split deck is adjusted to produce a predetermined temperature profile that results in the temperature of all pins being equal when they reach the dipper.

### 3. Novel Approaches to Drying Cellulose Capsules After the Dipping Process

### a) Counterflow Drying and Enclosed Kilns

Drying techniques used in prior art mechanized capsule manufacture involves overhead kilns with perforations on the bottom plate through which air blows over the capsules. The air then escapes into the room. The present invention uses enclosed kilns where air is only introduced at the pin-exit end of the lower kiln (i.e., the end of the drying process) and then proceeds in a counterflow direction to the pinbar movement, all air being contained in the enclosed kilns and being removed at the pin-entry end of the top kiln, which is the beginning point of the drying process. The pins, on entering the drying process, encounter relatively humid air and, as the pins move through the drying process and become drier, they encounter increasingly drier air.

### b) Inside-Out Drying

All capsule drying was formerly accomplished by drying from the outside by blowing air over the pins from above. The present invention dries from the inside-out by using heat both from beneath the deck and also from above the pins (radiant or infrared, microwave, etc.) to heat the pins themselves, thus driving the moisture out from the inside. This gives more uniform capsules free from defects of wrinkles and corrugations common with outside-in drying, and avoids the case hardening or skinning over that occurs in cellulose capsule production by drying with air alone.

### 4. Novel Ways to Preheat Pinbars Prior to Dipping

### a) Adding a Separate Preheat Section to the Process Prior to Dip

Heating the pins is necessary so that gel will be formed on the pins in the dipping bath. In the Murphy patent, pins are heated as a byproduct of the drying. The hot air used to dry the capsules also heated the pinbars (in a way that is uncontrolled with regard to pin-temperature requirements for dipping) before capsule removal and redipping. The only mention in the prior art of controlled preheating is the Chisholm patent which suggests that the pins be immersed in a bath of hot beads prior to dip. In practice the Chisholm approach is not feasible because of the problems discussed hereinbelow under "Analysis of the Problems in the Prior Art." For example, removal of capsules made from the improved cellulose from pins is even more difficult than removal of capsules made from gelatin from pins (also very difficult) because the improved cellulose forms a weaker and more flexible film. Because the walls of the capsule parts lack sufficient rigidity to be removed easily, the lubricant layer must be administered carefully and left intact. The present invention provides a preheat area whose specific purpose is to apply heat to the pins without contact in preparation for dipping. This preheat area can be in any or all of the following places:
a) On the drying decks, or at the end of the drying decks and before the table section.
b) On the table section.
c) Between the table section and the automatic section.
d) After the automatic section and before the greasing section.
e) After the greasing section and before the dipping section by means that do not contact the pins.
f) In the dipping section by means that do not contact the pins, such as radiant heat, hot air, induction heat, contact elements to back side of bar, or other suitable method. Another problem with the Chisholm approach is that the traditional capsule machine does not have room to accommodate the procedure he recommends because of the close proximity of the dipping dishes to the centerline of the machine. Thus the present invention also includes extending the dipper section on both cap and body sides to move the dipping dishes further out from the centerline of the longitudinal axis of the traditional capsule machine. This allows space to accommodate a preheat process that does not involve contact with the pins.

### 5. Description of Apparatus

Fig. 8A shows some elements of a first schematic embodiment of the apparatus of the present invention, most notably a preheat section **80**, a kiln enclosure **81**, with air ingress aperture **82** and air egress aperture **83**, an insulated, heated table section enclosure **84**, an insulated, heated spinner section enclosure **85** and a dipper section having a built-in preheat portion **86**. The arrows in Fig. 8A indicate the direction of pin movement through the machine.

Fig. 9 shows a schematic embodiment of the apparatus of the present invention including several preheat sections, as follows: in the drying kiln **80,** between the drying kiln and the table section **91,** on the table section **92,** between table and automatics **93,** between automatics and greaser **94,** between greaser and dipper **95,** and in the dipper section **96.**

Fig. 8B shows the overall physical shape of kiln. The overall length **L1** of the machine, i.e., the length of the upper kiln, is **44** feet (13.4 m). This is longer than the traditional Colton machine, the upper kiln having been extended by three table-lengths to accommodate a new preheat section **94** (shown in Fig. 8C) between the automatics and the greaser. The height **H1** of the upper kiln is 2 feet (61 cm). The length **L2** of the lower kiln is 26 feet (7.9 m). The height **H2** of the lower kiln at the split deck is 2 feet (61 cm) and the height **H3** of the lower kiln at the back elevator is 1 foot (30 cm). The walls of the kiln are insulated. The kiln comprises an enclosure **81** having air entrance duct **801** and air exit duct **802**. The direction of air flow is indicated by arrows **803**. Fig. 8C locates the two 6-inch (152-mm) circular duct fans **805** and the single 10-inch (254-mm) duct fan **807,** all mounted in the lower kiln **26,** which power the air flow though both kilns. The two duct fans **805** are mounted side by side so as to blow air in a direction substantially parallel to the axis of the lower kiln toward the back of the machine, drawing air from inlet 801 and driving it into the upper kiln **24**. Eight 9-inch (229-mm) agitator fans **804** in the upper kiln are arranged in four pairs of side by side fans, each pair directed to blow air downwardly onto the pins so as to speed local drying of the gel with agitated (i.e., temperature-equalized) air. Three 9-inch (229-mm) fans **806** similarly mounted in the lower kiln dry the pins further.

Heat for inside-out drying and preheat is supplied by a series of five 22 inch by 17 inch (56 cm by 43 cm) radiant panels 808 mounted directly above the moving pinbars in the lower kiln. General preheat of the pinbars in the split deck position is provided from above by a 22 inch by 17 inch (56 cm by 43 cm) group of radiant panels **809** directly above the pinbars and preheat is applied selectively to portions of pinbars by conduction from the split deck assembly **810** that supports the pinbars. A "dome-setter" radiant panel **811** is provided for post-dip heating to facilitate post-dip gelling and inside-out drying.

The fan and heater configuration described above applies to one side, cap or body, and, in this respect, the cap and body sides are substantially identical, except that they are the mirror image of each other.

Inlet air temperature to the kiln is controlled in the range 125-180°F and is preferably 160°F. Absolute humidity of the air at the inlet is controlled in the range 0.006-0.012 lb moisture/lb air (0.6-1.2 percent) and is preferably 0.009 lb moisture/lb air (0.9 percent). Air flow rate through the body side of the kiln is 63 feet/min (0.32 m/sec) measured at the 8 inch (203 mm) body side inlet duct. The corresponding flow rate through the cap side kiln measured at a cap side inlet duct of the same size is 7 feet/min (0.036 m/sec). Within the kiln the flowing air is cooled by evaporative cooling and is heated by heat from the bars and from the radiant panels. The temperature profile found to provide acceptable capsule parts is given in Table 5. Heat from the radiant panels and thermal conduction heaters is adjusted to maintain the predetermined temperatures of Table 5. Pressure drop across the kiln is 0.020 inches of water (0.005 kPa) (body side) and 0.005 inches of water (0.012 kPa) (cap side). This indicates how much greater the air flow rate through the body side is than the air flow rate through the cap side.

**TABLE 5 -**

| ACCEPTABLE AIR TEMPERATURE PROFILE | | | | |
|---|---|---|---|---|
| Location in Kiln | Body Kiln Air Temperature | | Cap Kiln Air Temperature | |
| | °F | °C | °F | °C |
| A | 111 | 43.9 | 111 | 43.9 |
| B | 109 | 42.8 | 108 | 42.2 |
| C | 110 | 43.3 | 107 | 41.7 |
| D | 110 | 43.3 | 106 | 41.1 |
| E | 111 | 43.9 | 104 | 40.0 |
| F | 114 | 45.6 | 104 | 40.0 |
| G | 120 | 48.9 | 105 | 40.6 |
| H | 123 | 50.6 | 112 | 44.4 |
| I | 142 | 61.1 | 140 | 60.0 |
| J | 151 | 66.1 | 159 | 70.6 |
| K | 149 | 65.0 | 147 | 63.9 |

Figs. 10A and 10B show temperature sensors and underdeck heaters for preheat on the split deck in the drying kiln. Figs. 10A and 11 give details of split deck **810** and radiant panel **809** respectively from Fig. 8C. Fig. 10A shows sensors **104** mounted in deck **101.** Heaters **103** are mounted under the deck. Both sensors and heaters are electrically connected to controllers **105** which maintain the predetermined temperatures given in Tables 6A and 6B. The deck itself contains thermal isolators **102**, so that the several sections of deck beneath a given pinbar are thermally isolated one from another. Cap pinbars move in groups of twenty from station to station approximately every 40-70 seconds in the drying kilns and body pinbars do likewise. The direction of movement of the pinbars is shown by the arrows in Fig. 10C. Such a group of pinbars has a length of 22 inches (56 cm), the length of one pinbar, and a width of 17 inches (43 cm), the width of twenty pinbars. Supporting the pinbars in the last station of the drying kiln is the split deck shown in plan view in Fig. 10D. The thermal isolators **102** and the portions of the deck **101** enclosed by the thermal isolators are also shown in crosssection elevation view in Fig. 10A. Selective heating of different portions of twenty pinbars to compensate for pre-dip dwell time and for temperature gradient in the'machine is achieved by controllers 105 controlling each of the several enclosed deck portions at a predetermined temperature. A temperature profile for a preferred embodiment of the present invention is given for each enclosed deck portion **101** of Fig. 10D in Table 6A for the cap side and Table 6B for the body side. The dimensions of the enclosed deck portions **101** in Fig. 10D are given in Table 7.

**TABLE 6A -**

| CAP SIDE SPLIT DECK TEMPERATURE PROFILE | | | | |
|---|---|---|---|---|
| | A °F (°C) | B °F (°C) | C °F (°C) | D °F (°C) |
| 1 | 306 (152) | 251 (122) | 235 (113) | 267 (131) |
| 2 | 181 (82.8) | 178 (81.1) | 153 (67.2) | 174 (78.9) |
| 3 | 193 (89.4) | 165 (73.9) | 135 (57.2) | 142 (61.1) |

**TABLE 6B -**

| BODY SIDE SPLIT DECK TEMPERATURE PROFILE | | | | |
|---|---|---|---|---|
| | A °F (°C) | B °F (°C) | C °F (°C) | D °F (°C) |
| 1 | 246 (119) | 191 (88.3) | 252 (122) | 288 (142) |
| 2 | 213 (101) | 125 (51.7) | 193 (89.4) | 154 (51.1) |
| 3 | 209 (98.3) | 195 (90.6) | 273 (134) | 261 (127) |

**TABLE 7 -**

| CAP AND BODY SIDE, DECK SECTION DIMENSIONS | | | | |
|---|---|---|---|---|
| | A Inch (mm) | B Inch (mm) | C Inch (mm) | D Inch (mm) |
| 1 | 3 x 4 (76 x 102) | 5 x 4 (127 x 102) | 5 x 4 (127 x 102) | 3 x 4 (76 x 102) |
| 2 | 3 x 10 (76 x 254) | 5 x 10 (127 x 254) | 5 x 10 (127 x 254) | 3 x 10 (76 x 254) |
| 3 | 3 x 4 (76 x 102) | 5 x 4 (127 x 102) | 5 x 4 (127 x 102) | 3 x 4 (76 x 102) |

Fig. 11 shows non-contact temperature sensors and overhead radiant heaters for general preheat on the split-deck in the drying kiln, detail **809** of Fig. 8C. Non-contact sensors **111** measure the temperature of the pins (or local area of pinbar) from above. Overhead radiant heaters **112** are mounted to the thermal enclosure **113**. Controllers **106** are used (in conjunction with controllers **105**) to maintain the predetermined temperatures of Tables 6A and 6B on the split deck.

Additionally, hot air may be used for heating in the split deck area.

Fig. 8G shows the insulation box **831** for preserving preheat in the table section **27**. The box has a top and only two sides, one side being omitted to allow a group of twenty bars to enter and another side being omitted to allow bars to exit (in a direction transverse to their length) one at a time.

Fig. 8C locates (schematically) the table section **27**, the automatics **28,** the convection preheat section **94,** the greaser section **21,** the dipper section **22** and the spinners **23.** The convection preheat section **94** includes up to three convection heat systems **812** on each side. Arrows **813** indicate the direction of flow of heated air across the pinbar after the pinbar has left the automatics where capsules were removed and before the pinbar enters the greaser section **21** and the dipper **22.** The location of each of the six convection preheat systems **812** is shown in Fig. 8D between automatics **28** and greaser section **21.** The convection preheat system is shown in greater detail in Figs. 8E and 8F. Fig. 8E shows the squirrel cage blower **821,** the heating element **822,** the supply duct **823,** the pinbar **824,** the pin **825** and the return duct **826.** To accommodate the convection preheat section **94,** the original Colton machine was extended by three table-lengths, i.e., the upper kiln was extended by three table-lengths and the greaser section was moved three table-lengths away from the automatics. In a preferred embodiment, four convection preheat systems are used, two on each side. Fig. 8D also shows a schematic plan view of all sections between the split deck **810** and the spinners **23,** including the accumulators **832** and the final preheat section **95,** whose location necessitates that the dishes are located farther apart than they are in the traditional Colton machine.

Lubrication used in the greaser section **21** consists of a mixture of light mineral oil (59 percent), stearic acid (16 percent), calcium stearate (16 percent), and lecithin (9 percent). A very small measured quantity is delivered by a metering pump to a felt or brush which applies the lubricant directly to the pins. Then a felt-lined barrel distributes the lubricant uniformly over the pin surface.

Figs. 12 and 13 show a plan and elevation view respectively of a dipper section preheat arrangement. There is symmetry about line **A-A** except that capsule bodies are on one side and capsule caps are on the other. Body pinbars and cap pinbars slide into the dipper section preheat area in T-slides **121** and drop onto guide rails **124**. The dipper dishes are spaced apart to allow an area for the final preheat section **95.** See also Fig. 9. Heated air is blown across the pinbars via inlet ducts **123** and preheat hoods **122.** The pinbars, leaving the preheat area, are dipped in groups of five in the dipping dish **125** and spun in the spinners **23** within an enclosure **161.**

Fig. 13 shows a group of five bars in the accumulator **832** (five bars having fallen from the T-slides one at a time until five bars are accumulated in the accumulator). This group of five bars moves to station **131** in the final preheat section **95** where final preheat is applied. In an alternative embodiment, one that eliminates the need for preheating pins according to a time interval to compensate for different delay times between preheat and dipping, the dishes are moved apart further to accommodate a sufficient number of stations **131.** In this embodiment all preheat is performed between the accumulator and the dishes and is performed without disturbing the layer of grease that was applied to the pins on the greaser. Heat is preferably applied by thermal convection from hot air flowing over the pins as shown in Fig. 13, or by radiant heat. Heat may also be applied by moving a conducting bar into contact with the top surface of the bars, the pins pointing down as shown in Fig. 13. Alternatively, induction heating may be used.

Figs. 14A and 14B show two views of a preheater with air ducts for selectively heating pins in the T-Slides. Air for heating the pins passes through supply ducts **141** and return ducts **142.** The local temperature of the pinbar is measured by non-contact sensor **143.** This is an alternative to the convection preheat section of Figs. 8E and 8F.

Fig. 15 shows the schematic for control of the dish temperatures. Water **157** is pumped by circulating pump **151** through a chiller **152** and a heater **153.** The heater is controlled by a PID controller **154** connected to a temperature sensor in the body dish **155.** After the water leaves the heater, it flows through jackets around both the body dish **155** and the cap dish **156.** The temperature in both dishes is controlled to 81°F ±1°F (27.2°C ±0.6°C). Body pins should enter the dish at a temperature of 152°F (66.7°C) (range 144°F-156°F (62.2°C-68.9°C)) and cap pins at a temperature of 151°F (66.1°C) (range 149°F-156°F (65.0°C-68.9°C)). After a pin has been dipped, its temperature should be in the range shown in Table 8.

**TABLE 8 -**

| PIN TEMPERATURES AFTER DIPPING | | | | |
|---|---|---|---|---|
| Temperature | | Optimum °F (°C) | Minimum °F (°C) | Maximum °F (°C) |
| Location Table Load | Body | 124 (51.1) | 123 (50.6) | 126 (52.2) |
| (Spinner) | Cap | 122 (50.0) | 121 (49.4) | 124 (51.1) |
| Table 1 of | Body | ---- | 119 (48.3) | 121 (49.4) |
| Upper Deck | Cap | ---- | 120 (48.9) | 124 (51.1) |

Figs. 16A, 16B and 16C show apparatus for heating the pins through the pinbar to permit post-dip gelation in the spinner section and "inside-out drying" in the drying kiln. The spinner section is enclosed and heat is applied to the pins to cause continued gelation and inside-out drying. Heat is applied in the spinner section by blowing hot air over the pins via ducts **163** and **164** and by heating the pins from radiant panels **162** mounted to the walls of the enclosure **161**. Panels **162** are substantially parallel to the longitudinal axes of the bars. It has been found that using a pin temperature at dipping that is cooler than the temperature used by Murphy, and heating the pins after dipping to continue gelation, provides a better consistency and fewer defects in the finished capsule. Heat applied to the pinbar in the drying section drives moisture from the inside-out as shown in Figs. 16B and 16C (inside-out drying). Arrows in Fig. 16C in the bar and pin indicate flow of heat. Arrows in Fig. 16C in the gel and in the air indicate flow of moisture. Inside-out drying prevents the formation of "skin" on the outer surface of the capsule that can occur when drying from the outside with blown air alone.

Fig. 17 illustrates the process of removing the capsule part from the pin. A gripper **171** (modified stripper) pivots about pivot **172**, when driven by wedge **173**, to grip the capsule part **174** prior to sliding it off the pin. The gripper has opposed gripping faces.

Fig. 18 gives details of the gripper of Fig. 6. The gripping faces **181** may be provided with raised ridges or rows of teeth (which may be longitudinal or circumferential to the axis of the pin), or have surface composition or texture, so as to grip the capsule.

### 6. Pin Size

An important factor in achieving production quantities of capsule bodies and caps that will run problem-free in high-speed filling machines is to meet close specifications, especially on external dimensions. For example, if the external diameter of each capsule part is even slightly too large, caps and bodies will not consistently separate in the filling chamber because they are too tight a fit. The external diameter of a capsule part is determined by the diameter of the pin mold, the shrinkage of the capsule material after removal from the mold, and the thickness of the capsule wall. The thickness of the capsule wall depends on a number of factors including the initial moisture content and viscosity of the gel and the drying conditions. Accordingly, it is recommended, for the manufacture of a cellulose capsule part, to use a pin whose diameter is undersized compared to the capsule pin for the corresponding size gelatin capsule part. For example, for the manufacture of a "0" size cellulose capsule part it is recommended to use a capsule pin whose diameter is undersized by an amount in the range of approximately 0.002-0.006 inch (0.05-0.15 mm) or approximately 0.004 inch (0.1 mm) compared to the capsule pin for manufacture of a "0" size gelatin capsule part. For other capsule sizes, it is recommended that the pin diameter be undersized proportionately. From Table 4, the cut-point diameter of the prior art capsule cap pin is 0.2975 inch (7.56 mm) so a reduction range of 0.002-0.006 inch (0.05-0.15 mm) represents a reduction range of 0.7%-2.0% and a reduction of 0.004 inch (0.1 mm) represents a reduction of 0.13%. For forming capsule parts for capsules having thicker walls and the same external diameter, the pin diameter may be reduced further as discussed under "Increasing Capsule Stiffness" hereinbelow.

### 7. Cooling the Dipping Dishes

Passive cooling was found to be insufficient to dissipate the heat delivered to the dipping dishes by the entry of a succession of hot pins. In the prior art machines used to make gelatin capsules this problem cannot arise because cold pins are dipped into a hot gel. In these prior art machines, a jacket having pipes is used to pass hot water to maintain the temperature of the dipping dishes. A similar jacket is used in the present invention except that in the present invention the jacket is used for cooling. The jacket includes pipes that carry cooling water for removing heat from the dipping dishes so as to control the temperature of the solution in the dipping dishes and then maintain the solution at a substantially constant predetermined temperature.

### 8. Increasing Capsule Stiffness

Cellulose capsules made from the improved methyl cellulose ether composition disclosed by Sarkar are found to be less rigid than gelatin or earlier cellulose capsules of an equivalent shape, size and wall thickness. Also, it is essential that the capsule parts retain their shape in order to pass freely through the high-speed filling machine. For these reasons it has been found beneficial to increase the wall thickness of the capsule parts without increasing the external diameter of the capsule. (The external diameter of the capsule is the external diameter of the capsule cap.) Increasing the wall thickness for a given capsule size is accomplished by using a thinner cap pin, a thinner body pin and a combination of hotter pin and/or thicker solution. Other factors which may be used to increase wall thickness are longer dwell time in the dipping dishes, more time in the downward position in the spinning section and a modified temperature profile in the gelling stage. For a "'0" size capsule, a wall thickness increase of approximately 0.0005 inch (0.013 mm) is recommended, yielding a wall thickness of a capsule cap of approximately (0.0042 + 0.0005) = 0.0047 inch (0.119 mm). To increase the wall thickness of a capsule cap by an additional dimension Δ*w* without increasing the external diameter, it is necessary to reduce the diameter of the cap pin by approximately 2 x Δ*w*. To make the corresponding capsule body it is necessary to reduce the diameter of the body pin by approximately 4 x Δ*w* so that the body will fit into the smaller inside diameter of the cap. Accordingly, for a "0" size cellulose capsule having a wall thickness as recommended, the cap pin diameter is reduced by 0.001 inch (0.026 mm) and the body pin diameter is reduced by 0.002 inch (0.052 mm) in addition to the reduction discussed hereinbelow under "Capsule External Diameter and Pin Mold Diameter." From Table 4, the cut-point diameter of the prior art cap pin is 0.2975 inch (7.56 mm), so an additional reduction 0.001 inch (0.026 mm) represents an additional reduction of 0.3%. Again from Table 4, the cut-point diameter of the prior art body pin is 0.2855 inch (7.25 mm), so an additional reduction of 0.002 inch (0.052 mm) represents an additional reduction of 0.7%.

Alternatively, or additionally, the stiffness of the capsule may be increased by providing in the capsule body a reinforcing ring, similar to the locking ring, located between the locking ring and the dome of the capsule body. This approach provides, for a given capsule wall thickness, a stiffer capsule with a reduced penalty in terms of material content of the capsule body and reduction in interior volume of the finished capsule. One or more reinforcing rings may be provided.

### 9. Serial Dipping

An alternative embodiment of the present invention uses serial dipping of pins instead of the batch dipping using a modified Colton machine as described hereinabove. Serial dipping permits every pin to proceed through an identical preheat process. This eliminates the need to compensate for different elapsed time pin-to-pin between preheat and dipping. Dipping one pin at a time would, of course, reduce the throughput rate by a factor of 150 over the embodiment of Fig. 8A in which there are thirty pins per bar and five bars are dipped together as a batch. However, it would be possible to mount pins on an articulated base (i.e., a chain) one pin per link, and circulate several such chains in parallel through a preheat process, a dipping process and a drying process on a machine, including an enclosed drying kiln, designed for the purpose. Another alternative embodiment of the present invention provides multiple pins on a bar and transports one bar at a time through both the preheat section and the dipping section. In this way the bar-to-bar difference of elapsed time is eliminated and only the differential temperature along the bar must be compensated. This could be accomplished by a functional equivalent of the split deck.

### Solutions to the Problems Unresolved in the Prior Art

### A. Analysis of the Problems in the Prior Art

An important contribution of the present invention is the analysis of the several unresolved problems in the prior art from the perspective of each stage of manufacture and use, as follows:

### A1. Preheat

In the Colton machine the most acceptable areas for preheating are those prior to the table section where the bars are assembled in groups of twenty and are stationary for a period during which they can all be heated together. However, the problem with preheating prior to the table section is that the action of the table section causes some bars to wait longer than others for their turn to dip and this can result in some bars cooling more than others prior to dipping, with the cooler bars making thinner capsule walls than the other bars. Also, the pins on one end of the bar might be hotter or cooler than the pins on the other end of the bar simply due to temperature gradients across the machine.

An appropriate place to heat the bars is in the dipper section just prior to dipping. In that section of a traditional Colton dipping capsule machine, five or more bars are grouped together and then moved as a group over to the dish for dipping in the gel solution. This allows for simultaneous heating of a group of bars which avoids the waiting problem identified above. The only patent to address preheating bars in the dipper portion of the Colton machine is Chisholm. In the Chisholm patent, pins are dipped into heated particles which contact the pins directly, heating them to the appropriate temperature for dipping. This approach creates other problems. First, the lubricant coating on the pin prior to dipping is important because cellulose capsules are much more difficult to remove from the pins than gelatin. Since the lubricant is already applied at this point in a Colton style capsule machine, the use of a pin-contact heating method results in unreliable capsule removal due to disturbance of the lubricant layer. Second, there is the problem of lubricant continuing to accumulate in the bead particles, degrading in the heated particles, and being redeposited on the pins at a later time. Third, there is no room in a traditional Colton machine to accommodate such a heated particle device. Fourth, no method of preheating alone (as opposed to pre-heating and post-heating) has been successful in making capsules from the Sarkar improved cellulose of sufficient uniformity for high-speed filling.

### A2. Capsule External Diameter and Pin Mold Diameter

For any given standard size of capsule (such as "0", "1", "2", etc.), the size of the pin mold used in the prior art is a well accepted standard with little variation in size. The combination of the standard pin mold diameter, accepted standards of wall thickness, and shrinkage contribute to an overall dimensional standard for the outside diameter of a capsule of a given size which can be accommodated without difficulty on high-speed filling machines where tolerances are tight.

The prior art teaches that the same pin mold may be used for cellulose as is used for gelatin, and there is no prior art that has stated otherwise. However, using the prior art pin for a given capsule size makes a cellulose capsule that is often oversized compared to the given standard size capsule. This causes difficulties in the high-speed filling machines.

### A3. Drying

The traditional drying kilns in the prior art employ plates with holes above the pins to introduce a stream of air in proximity to the capsules (Wilkie). Blowing air over the pins causes evaporative cooling which works well with gelatin since the cooling helps set the gel. However, with cellulose the object is to keep the gel above its thermal gel point until it is thermally set to a sufficient firmness. The traditional (Wilkie) design cools the wet cellulose gel through evaporative cooling, and can cause the gel to flow unevenly and uncontrolled down the mold pin. This makes an uneven capsule which cannot be filled on the precise high-speed filling machines.

Further, while some air movement is necessary to remove water vapor released during drying, air movement has a tendency to deform capsules made of cellulose more drastically than capsules made of gelatin, and a directed stream of air over the capsules can shift the gel before it is firm.

Blowing air over the exterior of the pins also causes the gel to dry from the outside first, causing a "skin" to form which traps moisture inside the film. This can lead to wrinkles or corrugations of the capsule wall, and subsequent problems on high-speed filling machines. Murphy employed a drying design similar to the Wilkie plates, but his patent concerns methyl cellulose which is slower drying and less apt to surface harden. The modified cellulose indicated in the Sarkar patent has a tendency to dry faster and is prone to deformation when dried in the conventional way.

Experimental work done by Eli Lilly with the improved Sarkar cellulose showed that conventional drying design with plates and holes has a tendency to cause starred ends and corrugations of the capsule walls. This is a result of compromise in the cellulose formulation, which improves dissolution (in the human digestive system) but results in faster release of moisture compared to celluloses used in earlier capsule technology.

Higher temperatures are used in the cellulose drying process than are used in the gelatin drying process. In the prior art drying process, air blows over the pins and escapes to the room. With the higher temperatures of the cellulose drying process, this adds significant heat and heating loads to the room and requires costly air conditioning.

### A4. Capsule Removal

With the improved cellulose in the Sarkar patent, removal of the capsule from the pin mold is one of the most difficult problems. The traditional approach used before the present invention involved a clothespin like device, called a stripper. The stripper traveled over the dipped length to a position beyond the capsule part. It then closed on the bare pin and moved along the length of the pin until it contacted the edge of the capsule and subsequently pushed the capsule part off the pin.

The improved cellulose lacks the rigidity necessary for a clean release from the pin when contacted by the stripper cheek. There is a tendency for the cellulose part to continue to adhere to the pin and to deform and break under stripper pressure rather than releasing freely.

A further complication in stripping cellulose capsules is the low moisture content. Whereas moisture can aid capsule removal in the gelatin process, cellulose capsules become soft at even modest moisture levels. Thus stripping must always be accomplished under dry capsule conditions. As with gelatin, dry capsules make capsule removal more difficult.

Increasing lubrication to aid stripping also poses problems since the cellulose gel is very prone to movement during and immediately after the dip. Excessive lubrication, or even lubricants with particularly slippery characteristics, have a tendency to cause uneven capsule walls. High temperatures inherent in the process add other constraints to the choice of lubricant.

### A5. Capsule Filling

Lack of uniformity, the sources of which are discussed hereinabove, causes problems on high-speed filling machines. In addition, the flexibility of the improved Sarkar cellulose also causes another problem: being flexible, the capsules are easily deformed out of round.

### B. Solution of the Problems in the Prior Art

The problems in each stage of making and using the capsules are solved in the following manner:

### B1. Preheat

Since some bars must wait longer than others to dip, the present invention addresses the issue of differential cooling and temperature compensation by selectively heating some bars to a higher temperature than other bars so that all bars have substantially the same temperature when dipped as a group of five or more. This is accomplished by using a pattern of thermally isolated heating elements below the bars (the "split deck") and above the bars (radiant heaters). These heating elements selectively heat certain bars to predetermined temperatures so that substantially equal temperatures are achieved at dip.

In addition, the temperature of a bar may vary along its length or front to back. The split deck allows the selective heating of portions of bars, those portions which are otherwise repeatedly cooler than other portions. Thermal sensors are used to maintain the individual heating areas at an appropriate temperature to consistently deliver all bars and portions of bars-at substantially the same dip temperature.

Preheating in the dipper section may be accomplished by heating the pins by a non-contact heating method which overcomes the problems associated with Chisholm's heated particle method. Hot air, radiant elements, etc. may be used in proximity to the pins without disturbing the lubricant layer, and without the concern of deposits of lubricant on the contact particles. To accommodate non-contact preheating in the dipper just prior to dip, the present invention modifies the Colton style machine by extending it away from the centerline on both the cap side and the body side. Also, contact to the back of the bars (away from the pins) may be used to aid preheating in the dipper. Heated elements may be moved directly in contact with the back of the bars as sole preheating, or in conjunction with a non-contact heating method applied to the pin side of the bar.

To achieve the level of uniformity necessary for high-speed filling, pre-dip heating and post-dip heating are used in conjunction. Post-dip heating continues the gelling process after the dip and assures rapid firming of the cellulose film. This is accomplished by applying heat directly before the dip and directly after the dip and continuing to apply heat for gelation and inside-out drying until the film is sufficiently firm.

### B2. Capsule External Diameter and Pin Mold Diameter

The apparatus of the present invention includes a pin mold which is undersized to compensate for the differential in shrinking between capsules made from the improved cellulose composition and capsules made from gelatin. Thus, for example, each undersized pin may have an elongated pin body; a domed head located at one end of the pin body; and a cylindrical sidewall surrounding the pin body and extending from the domed head, the sidewall having a diameter which varies along the length of the pin body such as to provide a taper with narrower dimension toward the domed head end of the pin body, and a cut-point defining a cut-point diameter at a position along the length of the pin body at which the capsule part may be cut to form an open end; wherein the cut-point diameter of the undersized pin for making a cellulose capsule part of a given size-number is smaller than the cut-point diameter of a conventional pin used in the manufacture of a gelatin capsule part of the given size number. This results in a cellulose capsule which has the same overall diameter and wall thickness as the equivalent gelatin capsule, and is therefore capable of running in existing high-speed filling machines.

### B3. Drying

The present invention does not use plates with air blowing directly over the pins, but uses a fully enclosed drying tunnel (kiln), in which drying is accomplished by inside-out drying in the most critical stages of drying. This is accomplished by using heating elements directly under the deck (or bottom) of the drying tunnel and radiant elements overhead in the drying tunnel, keeping pins above the thermal gel point of the cellulose in the early drying stages. This drives moisture out from the inside. It avoids the skinning over and wrinkling associated with the outside-in drying of the prior art.

Process air is directed through the enclosed drying tunnel in counterflow to the direction of motion of the pins. The purpose of the counterflow air is not so much to dry the capsule walls, but rather to move moisture through the system which has been driven out of the capsule parts by inside-out drying so the moisture can be exhausted from the drying kilns. In this procedure, drier capsules at the end of the drying tunnel come into contact with dry air which is introduced at the end of the drying tunnel. As the air moves towards the beginning of the drying tunnel, it picks up moisture. Therefore, wet capsules at the beginning of the drying tunnel come into contact with wet air and drier capsules at the end of the drying process come in contact with drier air. This keeps an appropriate relationship of water vapor pressure between capsules and throughput air throughout the drying process to ensure even drying. The result is a capsule part without deformation.

In addition, local heating or air agitation is employed to speed drying in selected areas where the film is sufficiently firm so that deformation is not a problem. Full enclosure and insulation of the drying kilns also prevents heat escaping into the room, thereby avoiding the higher heating load on the facility that would occur without full enclosure. This is in direct contrast to the prior art, in which hot air is blown over the capsule parts and then escapes into the room.

### B4. Capsule Removal

Murphy used the non-modified cellulose, which was rigid enough to be removed by traditional methods. However, the improved dissolving cellulose of Sarkar cannot be consistently removed by pushing capsule parts off the pin by pushing from behind the dipped edge. In the present invention, the "stripper" device is modified into a gripper, which has two opposed surfaces which grab the capsule above the dipped edge, on the capsule wall itself, and remove the capsule using pressure to the side walls in conjunction with a motion along the longitudinal axis of the pin mold.' The Colton machine is modified to allow the grippers to open wider than normal strippers and the machine is also modified to move the gripper into a position closer to the closed end of the capsule so that it contacts on the capsule surface, rather than behind it. This action removes the capsule without damage to the open end, which often occurs when the prior art technique is used on cellulose capsule parts.

### B5. Capsule Filling

The flexibility of capsules made from the improved cellulose can cause capsules to malfunction in filling machines, particularly if deformed out of round. The apparatus of the present invention provides a pin which is undersized (in the correct amount) to allow a thicker capsule wall, and therefore better rigidity, while maintaining the accepted overall diameter of a given standard capsule size, such as "0", "1", etc.

The apparatus of the present invention also provides a body pin which adds an extra circumferential ring to the capsule body between the lock ring and the dome which physically reinforces the capsule wall. One or more extra rings may be added to increase the overall strength of the capsule body part, and to assure capsule bodies remain circular.

## Claims

1. A method of manufacturing pharmaceutical cellulose capsules for filling by capsule filling machines, each capsule consisting of two capsule parts, a capsule body (1) and a capsule cap (2), from an aqueous solution of a thermogelling cellulose ether composition, using capsule body pins and capsule cap pins as molds, comprising the steps of:
gelatinizing solution on a pin (31), including dipping a pin in the solution to a dip line (42), to form on the pin a capsule part of gelatinized solution (41);
drying the gelatinized solution on the pin to form a capsule part of dried gelatinized solution;
removing the capsule part from the pin; and
transporting a plurality of pins through the steps in a closed path;
**characterized in that** drying the gelatinized solution on a pin includes moving a plurality of pins through a kiln enclosure (81) and moving air over the gelatinized solution on the pins within the enclosure;
such that, during an early stage of drying, the gelatinized solution on a pin encounters humid air having a water content high enough to slow down drying and prevent the formation of a type of cellulose capsule defect associated with drying too rapidly and;
during a later stage of drying, the gelatinized solution on the pin encounters air having a lower water content than the humid air, the lower water content low enough to allow the gelatinized solution to dry sufficiently.

2. A method according to claim 1, wherein moving air over the gelatinized solution on the pins includes moving air (803) within the enclosure in a direction opposed to the direction of movement of the pins.

3. A method according to claim 1, wherein moving air over the gelatinized solution on the pins includes moving air over capsule body pins at one rate and moving air over capsule cap pins at a different rate.

4. A method according to claim 1, further comprising the step of controlling the humidity of air entering the enclosure.

5. A method according to claim 4, further comprising the step of controlling the humidity of air entering the enclosure within a range 0.006-0.012 1b water/lb air (0.6-1.2 percent).

6. A method according to claim 1, further comprising the step of controlling the temperature of air entering the enclosure within a range 125°F-180°F (52°C-82°C).

7. A method according to claim 1, further comprising the step of heating the pins within the enclosure to achieve a predetermined air temperature profile within the enclosure.

8. A method according to claim 1, wherein the step of drying includes radiating heat onto the gelatinized solution on the pins within the enclosure.

9. A method according to claim 8, wherein the step of drying further includes heating the pins by thermal conduction so as to keep the pins at a temperature above the thermal gel point of the solution in early stages of drying.

10. A method according to claim 1, further comprising the step of controlling the flow of air within the enclosure to achieve a predetermined humidity profile within the enclosure.

11. An apparatus for manufacturing pharmaceutical cellulose capsules, the capsules suitable for filling by capsule filling machines, each capsule consisting of two parts, a capsule body and a capsule cap formed from an aqueous solution of a thermogelling cellulose ether composition, comprising:
a plurality of pinbars, each pinbar having a bar (32) with a plurality of pins (31) mounted to the bar;
dipper means (22) for dipping the pins into the solution and gelatinizing solution on the pins to form on each pin a capsule part of gelatinized solution;
dryer means (24, 25, 26) for drying gelatinized solution on the pins to form capsule parts of dried gelatinized solution;
automatics means (28) for removing the capsule parts from the pins; and
transport means for moving the pinbars in a closed loop path through the dipper means, the dryer means, and the automatics means;
**characterized in that** the dryer means includes an elongated kiln (24, 25,26) enclosing a portion of the transport means, the kiln having a pin-entry and an air outlet (83) proximate to the pin-entry, and a pin-exit and an air inlet (82) proximate to the pin-exit, the transport means adapted to move the pinbars with the pins carrying gelatinized solution through the kiln from the pin-entry to the pin-exit, the dryer means having means for moving air within the kiln from the air inlet to the air outlet, such that air moving within the kiln moves successively over gelatinized solution on increasingly later-dipped pins.

12. An apparatus according to claim 11, wherein the dryer means is adapted to provide counterflow air within the duct substantially overall.

13. An apparatus according to claim 11, wherein the dryer means further includes radiant heaters (808) mounted within the kiln.

14. A capsule manufactured in accordance with the method of claims 1 to 10.

## Patentansprüche

1. Verfahren zur Herstellung von pharmazeutischen Cellulosekapseln zum Füllen durch Kapselfüllmaschinen, wobei jede Kapsel aus zwei Kapselteilen, einem Kapselkörper (1) und einer Kapselkappe (2), besteht, aus einer wässrigen Lösung einer thermogelierenden Celluloseether-Zusammensetzung unter Anwendung von Kapselkörper-Dornen und Kapselkappen-Dornen als Formen, das die folgenden Schritte umfaßt:
Gelatinieren der Lösung auf einem Dorn (31), einschließlich des Tauchens eines Dorns in der Lösung in einer Tauchlinie (42), um auf dem Dorn einen Kapselteil aus gelatinierter Lösung (41) zu bilden,
Trocknen der gelatinierten Lösung auf dem Dorn, um ein Kapselteil der getrockneten, gelatinierten Lösung zu bilden,
Abnehmen des Kapselteils von dem Dorn und
Transportieren einer Vielzahl der Dorne durch die Schritte in einer geschlossenen Bahn,
**dadurch gekennzeichnet, daß** das Trocknen der gelatinierten Lösung auf einem Dorn die Bewegung einer Vielzahl der Dorne durch ein Trockenofengehäuse (81) und die Bewegung von Luft über die gelatinierte Lösung auf den Dornen innerhalb des Gehäuses einschließt,
derartig, daß die gelatinierte Lösung auf einem Dorn während einer frühen Trocknungsphase auf feuchte Luft mit einem Wassergehalt trifft, der ausreichend hoch ist, um das Trocknen zu verlangsamen und die Bildung eines Typs von Cellulosekapsel-Defekt zu verhindern, der in Verbindung mit einem zu schnellen Trocknen auftritt, und
die gelatinierte Lösung auf dem Dorn während einer späteren Trocknungsphase auf Luft mit einem niedrigeren Wassergehalt als dem der feuchten Luft trifft, wobei der niedrigere Wassergehalt ausreichend niedrig ist, um das ausreichende Trocknen der gelatinierten Lösung zu ermöglichen.

2. Verfahren nach Anspruch 1, bei dem die Bewegung von Luft über die gelatinierte Lösung auf den Dornen die Bewegung von Luft (803) innerhalb des Gehäuses in einer Richtung einschließt, die der Bewegungsrichtung der Dorne entgegengesetzt ist.

3. Verfahren nach Anspruch 1, bei dem die Bewegung von Luft über die gelatinierte Lösung auf den Dornen die Bewegung von Luft über die Kapselkörper-Dorne mit einer Geschwindigkeit und die Bewegung von Luft über die Kapselkappen-Dorne mit einer unterschiedlichen Geschwindigkeit einschließt.

4. Verfahren nach Anspruch 1, das außerdem den Schritt der Steuerung der Feuchtigkeit der Luft, die in das Gehäuse eintritt, umfaßt.

5. Verfahren nach Anspruch 4, das außerdem den Schritt der Steuerung der Feuchtigkeit der Luft, die in das Gehäuse eintritt, innerhalb eines Bereichs von 0,006 bis 0,012 Pfund Wasser/Pfund Luft (0,6 bis 1,2 %) umfaßt.

6. Verfahren nach Anspruch 1, das außerdem den Schritt der Steuerung der Temperatur der Luft, die in das Gehäuse eintritt, innerhalb eines Bereichs von 52°C bis 82°C (125°F bis 180°F) umfaßt.

7. Verfahren nach Anspruch 1, das außerdem den Schritt der Erhitzung der Dorne innerhalb des Gehäuses umfaßt, um innerhalb des Gehäuses ein vorher festgelegtes Lufttemperaturprofil zu erreichen.

8. Verfahren nach Anspruch 1, bei dem der Schritt des Trocknens das Abstrahlen von Wärme auf die gelatinierte Lösung auf den Domen innerhalb des Gehäuses einschließt.

9. Verfahren nach Anspruch 8, bei dem der Schritt des Trocknens außerdem das Erhitzen der Dorne durch Wärmeleitung einschließt, um so die Dorne in den frühen Trocknungsphasen bei einer Temperatur über der Wärmegelatinierungstemperatur der Lösung zu halten.

10. Verfahren nach Anspruch 1, das außerdem den Schritt der Steuerung des Luftstroms innerhalb des Gehäuses umfaßt, um innerhalb des Gehäuses ein vorher festgelegtes Feuchtigkeitsprofil zu erreichen.

11. Vorrichtung zur Herstellung von pharmazeutischen Cellulosekapseln, wobei die Kapseln für die Füllung durch Kapselfüllmaschinen geeignet sind, wobei jede Kapsel aus zwei Teilen, einem Kapselkörper und einer Kapselkappe, besteht, die aus einer wässrigen Lösung einer thermogelierenden Celluloseether-Zusammensetzung gebildet werden, wobei die Vorrichtung folgendes umfaßt:
eine Vielzahl von Dornleisten, wobei jede Dornleiste eine Leiste (32) mit einer Vielzahl von Domen (31) hat, die an der Leiste befestigt sind,
Tauchmittel (22) zum Tauchen der Dorne in die Lösung und Gelatinierungslösung auf den Domen, um auf jedem Dorn ein Kapselteil aus gelatinierter Lösung zu bilden,
Trocknungsmittel (24, 25, 26) zum Trocknen der gelatinierten Lösung auf den Domen, um Kapselteile aus getrockneter, gelatinierter Lösung zu bilden,
automatische Mittel (28) zum Abnehmen der Kapselteile von den Domen und
Transportmittel zur Bewegung der Dornleisten in einer geschlossenen Kreisbahn durch die Tauchmittel, die Trocknungsmittel und die automatischen Mittel,
**dadurch gekennzeichnet, daß** die Trocknungsmittel einen länglichen Trockenofen (24, 25, 26) einschließen, der einen Abschnitt der Transportmittel umschließt, wobei der Trockenofen einen Domeinlaß und einen Luftauslaß (83) nahe des Dorneinlasses und einen Domauslaß und einen Lufteinlaß (82) nahe des Dornauslasses hat, die Transportmittel dafür geeignet sind, die Dornleisten mit den Dornen, welche die gelatinierte Lösung tragen, durch den Trockenofen vom Domeinlaß zum Domauslaß zu bewegen, wobei die Trocknungsmittel Mittel zur Bewegung von Luft innerhalb des Trockenofens vom Lufteinlaß zum Luftauslaß haben, derartig, daß Luft, die sich innerhalb des Trockenofens bewegt, sich nacheinander über die gelatinierte Lösung auf immer später eingetauchten Domen bewegt.

12. Vorrichtung nach Anspruch 11, bei der die Trocknungsmittel dafür geeignet sind, im wesentlichen innerhalb des gesamten Durchgangs Luft im Gegenstrom bereitzustellen.

13. Vorrichtung nach Anspruch 11, bei der die Trocknungsmittel außerdem Strahlungsheizvorrichtungen (808) einschließen, die innerhalb des Trockenofens angebracht sind.

14. Kapsel, die nach dem Verfahren der Ansprüche 1 bis 10 hergestellt worden ist.

## Revendications

1. Procédé de production de capsules pharmaceutiques de cellulose en vue d'un remplissage par des machines de remplissage de capsules, chaque capsule étant composée de deux parties de capsule, un corps de capsule (1) et un capuchon de capsule (2), à partir d'une solution aqueuse d'une composition d'un éther cellulosique thermogélifiante, avec utilisation de broches du corps et de broches du capuchon de la capsule comme moules, comprenant les étapes ci-dessous:
gélatinisation de la solution sur une broche (31), englobant l'immersion d'une broche dans la solution jusqu'à une ligne d'immersion (42) pour former sur la broche une partie de capsule de solution gélatinisé (41);
séchage de la solution gélatinisée sur la broche pour former une partie de capsule de solution gélatinisée séchée;
enlèvement de la partie de capsule de la broche; et
transport de plusieurs broches à travers les étapes dans une trajectoire fermée;
**caractérisé en ce que** le séchage de la solution gélatinisée sur une broche englobe le déplacement de plusieurs broches à travers une enceinte de four (81) et de déplacement d'air au-dessus de la solution gélatinisée sur les broches à l'intérieur de l'enceinte;
de sorte que, au cours d'une étape précoce du séchage, la solution gélatinisée sur une broche rencontre de l'air humide ayant une teneur en eau suffisante pour ralentir le séchage et empêcher la formation d'un type de défaut de la capsule de cellulose associé à un séchage trop rapide; et
la solution gélatinisée rencontre, au cours d'une étape ultérieure du séchage, de l'air ayant une teneur inférieure en eau à celle de l'air humide, la teneur réduite en eau étant suffisamment réduite pour permettre un séchage suffisant de la solution gélatinisée.

2. Procédé selon la revendication 1, dans lequel l'étape de déplacement d'air au-dessus de la solution gélatinisée sur les broches englobe le déplacement d'air (803) dans l'enceinte dans une direction opposée à la direction du déplacement des broches.

3. Procédé selon la revendication 1, dans lequel l'étape de déplacement d'air au-dessus de la solution gélatinisée sur les broches englobe le déplacement d'air au-dessus des broches du corps de la capsule à une vitesse, et le déplacement de l'air au-dessus des broches du capuchon de la capsule à une vitesse différente.

4. Procédé selon la revendication 1, comprenant en outre l'étape de contrôle de l'humidité de l'air entrant dans l'enceinte.

5. Procédé selon la revendication 4, comprenant en outre l'étape de contrôle de l'humidité de l'air entrant dans l'enceinte dans le cadre d'un intervalle allant de 0,006 à 0,012 lb d'eau/lb d'air (0,6-1,2 pour cent).

6. Procédé selon la revendication 1, comprenant en outre l'étape de contrôle de la température de l'air entrant dans l'enceinte dans le cadre d'un intervalle allant de 125°F à 180°F (52°C - 82°C).

7. Procédé selon la revendication 1, comprenant en outre l'étape de chauffage des broches dans l'enceinte pour établir un profil prédéterminé de la température de l'air dans l'enceinte.

8. Procédé selon la revendication 1, dans lequel l'étape de séchage englobe le rayonnement de chaleur sur la solution gélatinisée sur les broches à l'intérieur de l'enceinte.

9. Procédé selon la revendication 8, dans lequel l'étape de séchage englobe en outre le chauffage des broches par conduction thermique, de sorte à maintenir les broches à une température supérieure au point de gélification thermique de la solution au cours des étapes précoces du séchage.

10. Procédé selon la revendication 1, comprenant en outre l'étape de contrôle de l'écoulement de l'air dans l'enceinte pour établir un profil prédéterminé de l'humidité dans l'enceinte.

11. Dispositif de production de capsules pharmaceutiques de cellulose, les capsules étant destinées à un remplissage par des machines de remplissage de capsules, chaque capsule étant composée de deux parties, un corps de la capsule et un capuchon de la capsule, produites à partir d'une solution aqueuse d'une composition d'éther cellulosique thermogélifiante, comprenant:
plusieurs barres à broches, chaque barre à broches comportant une barre (32), plusieurs broches (31) étant montées sur la barre;
un moyen d'immersion (22) pour immerger les broches dans la solution et gélatiniser la solution sur les broches pour former sur chaque broche une partie de capsule de solution gélatinisée;
un moyen de séchage (24, 25, 26) pour sécher la solution gélatinisée sur les broches pour former des parties de capsule de solution gélatinisée séchée;
un moyen automatique (28) pour enlever les parties de capsule des broches; et
un moyen de transport pour déplacer les barres à broches dans une trajectoire en boucle fermée à travers le moyen d'immersion, le moyen de séchage et le moyen automatique;
**caractérisé en ce que** le moyen de séchage englobe un four allongé (24, 25, 26) renfermant une partie du moyen de transport, le four comportant une entrée des broches et une sortie d'air (83) proche de l'entrée des broches, et une sortie des broches et une entrée d'air (82) proche de la sortie des broches, le moyen de transport étant destiné à transporter les barres à broches, les broches supportant la solution gélatinisée, à travers le four, de l'entrée des broches vers la sortie des broches, le moyen de séchage comportant un moyen pour déplacer l'air dans le four, de l'entrée d'air vers la sortie d'air, de sorte que l'air se déplaçant dans le four se déplace successivement au-dessus de la solution gélatinisée sur les broches à immersion ultérieure croissante.

12. Dispositif selon la revendication 11, dans lequel le moyen de séchage est destiné à établir un écoulement à contre-courant de l'air dans pratiquement l'ensemble du conduit.

13. Dispositif selon la revendication 11, dans lequel le moyen de séchage englobe en outre des dispositifs de chauffage par rayonnement (808) montés dans le four.

14. Capsule produite par l'intermédiaire du procédé selon les revendications 1 à 10.
